# FASCICULE DE BREVET EUROPEEN

(11) **EP 1 102 812 B1**
(45) Date de publication et mention de la délivrance du brevet: **16.10.2002**
(21) Numéro de dépôt: 99936572.9
(22) Date de dépôt: 20.07.1999
(51) Int. Cl.: C08K 5/31, C08K 5/5398, C08K 5/54, C08L 21/00

(54) **SYSTEME DE COUPLAGE (CHARGE BLANCHE/ELASTOMERE DIENIQUE) A BASE D'ALKOXYSILANE POLYSULFURE, DE DITHIOPHOSPHATE DE ZINC ET DE DERIVE GUANIDIQUE**
HAFTVERMITTLERZUSAMMENSETZUNG (WEISSER FÜLLSTOFF/DIENRUBBER) DIE EIN ALKOXYSILANPOLYSULFID, EIN ZINKDITHIOPHOSPHAT UND EIN GUANIDINDERIVAT ENTHÄLT
COUPLING SYSTEM (WHITE FILLER/DIENE ELASTOMER) BASED ON POLYSULPHIDE ALKOXYSILANE, ZINC DITHIOPHOSPHATE AND GUANIDINE DERIVATIVE

(30) Priorité: 22.07.1998 FR 9809393
(43) Date de publication de la demande: 30.05.2001
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: VASSEUR, Didier, F-63100 Clermont-Ferrand (FR)
(74) Mandataire: Ribière, Joel
(86) Numéro de dépôt international: EP9905155
(87) Numéro de publication internationale: WO00005301

(56) Documents cités:
- EP-A- 0 832 920
- EP-A- 0 864 604
- DE-A- 4 435 311
- US-A- 3 842 111

## Description

La présente invention se rapporte aux compositions de caoutchoucs diéniques renforcées d'une charge blanche, destinées particulièrement à la fabrication de pneumatiques ou de produits semi-finis pour pneumatiques, en particulier aux bandes de roulement de ces pneumatiques.

Depuis que les économies de carburant et la nécessité de protéger l'environnement sont devenues une priorité, il est souhaitable de produire des élastomères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution de pneumatiques tels que par exemple des sous-couches, des gommes de calandrage ou de flancs ou des bandes de roulement et obtenir des pneumatiques aux propriétés améliorées, possédant notamment une résistance au roulement réduite.

Pour atteindre un tel objectif de nombreuses solutions ont été proposées, tout d'abord essentiellement concentrées sur l'utilisation d'élastomères modifiés au moyen d'agents tels que des agents de couplage, d'étoilage ou de fonctionnalisation, avec du noir de carbone comme charge renforçante dans le but d'obtenir une bonne interaction entre l'élastomère modifié et le noir de carbone. On sait en effet, d'une manière générale, que pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes, ce qui n'est en général pas le cas des charges blanches. Pour des raisons d'affinités réciproques, les particules de charge blanche ont une fâcheuse tendance, dans la matrice élastomérique, à s'agglomérer cntre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge blanche/élastomère) susceptibles d'être créées pendant l'opération de mélangeage, étaient effectivement obtenues ; ces interactions tendent d'autre part à augmenter la consistance des compositions caoutchouteuses et donc à rendre leur mise en oeuvre *("processability")* à l'état cru plus difficile qu'en présence de noir de carbone.

L'intérêt pour les compositions de caoutchouc renforcées de charge blanche a été cependant fortement relancé avec la publication de la demande de brevet européen EP-A-0 501 227 qui divulgue une composition de caoutchouc diénique vulcanisable au soufre, renforcée d'une silice précipitée particulière du type hautement dispersible, qui permet de fabriquer un pneumatique ou une bande de roulement ayant une résistance au roulement nettement améliorée, sans affecter les autres propriétés en particulier celles d'adhérence, d'endurance et de résistance à l'usure. La demande EP-A-0 810 258 divulgue quant à elle une nouvelle composition de caoutchouc diénique renforcée d'une autre charge blanche particulière, en l'occurrence une alumine (Al₂O₃) spécifique à dispersibilité élevée, qui permet elle aussi l'obtention de pneumatiques ou de bandes de roulement ayant un tel excellent compromis de propriétés contradictoires.

L'utilisation de ces silices ou alumines spécifiques hautement dispersibles, à titre de charge renforçante majoritaire ou non, a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la connexion entre la surface des particules de charge blanche et l'élastomère, tout en facilitant la dispersion de cette charge blanche au sein de la matrice élastomérique.

Par agent de "couplage" (charge blanche/élastomère), on entend de manière connue un agent apte à établir une connexion suffisante, de nature chimique et/ou physique, entre la charge blanche et l'élastomère ; un tel agent de couplage, au moins bifonctionnel, a par exemple comme formule générale simplifiée « Y-T-X », dans laquelle:
- Y représente un groupe fonctionnel (fonction "Y") qui est capable de se lier physiquement et/ou chimiquement à la charge blanche, une telle liaison pouvant être établie, par exemple, entre un atome de silicium de l'agent de couplage et les groupes hydroxyle (OH) de surface de la charge blanche (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe hydrocarboné permettant de relier Y et X.

Les agents de couplage ne doivent en particulier pas être confondus avec de simples agents de recouvrement de charge blanche qui de manière connue peuvent comporter la fonction Y active vis-à-vis de la charge blanche mais sont dépourvus de la fonction X active vis-à-vis de l'élastomère.

Des agents de couplage silice/élastomère, notamment, ont été décrits dans un grand nombre de documents, les plus connus étant des alkoxysilanes bifonctionnels.

Ainsi il a été proposé dans la demande de brevet FR-A-2 094 859 d'utiliser un mercaptosilane pour la fabrication de bandes de roulement de pneumatiques. Il fut rapidement mis en évidence et il est aujourd'hui bien connu que les mercaptosilanes, et en particulier le γ-mercaptopropyltriméthoxysilane ou le γ-mercaptopropyltriéthoxysilane, sont susceptibles de procurer d'excellentes propriétés de couplage silice/élastomère, mais que l'utilisation industrielle de ces agents de couplage n'est pas possible en raison de la forte réactivité des fonctions -SH conduisant très rapidement au cours de la préparation de la composition de caoutchouc dans un mélangeur interne à des vulcanisations prématurées, appelées encore "grillage" ("scorching"), à des plasticités Mooney très élevées, en fin de compte à des compositions de caoutchouc quasiment impossibles à travailler et à mettre en oeuvre industriellement. Pour illustrer cette impossibilité d'utiliser industriellement de tels agents de couplage porteurs de fonctions -SH, et les compositions de caoutchouc les contenant, on peut citer par exemple les documents FR-A-2 206 330, US-A-4 002 594.

Pour remédier à cet inconvénient, il a été proposé de remplacer ces mercaptosilanes par des alkoxysilanes polysulfurés, notamment des polysulfures de bis-trialkoxyl(C₁-C₄)silylpropyle tels que décrits dans de nombreux brevets ou demandes de brevet (voir par exemple FR-A-2 206 330, US-A-3 842 111, US-A-3 873 489, US-A-3 978 103, US-A-3 997 581). Parmi ces polysulfures, on citera notamment le disulfure de bis 3-triéthoxysilylpropyle (en abrégé TESPD), plus particulièrement le tétrasulfure de bis 3-triéthoxysilylpropyle (en abrégé TESPT) considéré aujourd'hui comme le produit apportant, pour des vulcanisats chargés à la silice, le meilleur compromis en terme de sécurité au grillage, de facilité de mise en oeuvre et de pouvoir renforçant.

La Demanderesse a découvert lors de ses recherches que l'utilisation d'un dithiophosphate de zinc en faible quantité, en combinaison avec un dérivé guanidique, a pour effet inattendu d'activer la fonction de couplage des alkoxysilanes polysulfurés, c'est-à-dire d'augmenter encore l'efficacité de ces derniers.

Grâce à cette activation. on peut notamment envisager de réduire de manière sensible la quantité d'alkoxysilanes polysulfurés habituellement utilisée. Ceci est particulièrement avantageux car ces alkoxysilanes sont d'une part très coûteux et doivent d'autre part être utilisés en une quantité importante, de l'ordre de deux à trois fois plus que la quantité de γ-mercaptopropyltrialkoxysilanes nécessaire pour obtenir des niveaux de propriétés de couplage équivalentes ; ces inconvénients bien connus ont été décrits par exemple dans les brevets US-A-5 652 310, US-A-5 684 171, US-A-5 684 172. Ainsi, le coût global des compositions de caoutchouc peut être notablement abaissé, ainsi que celui des pneumatiques qui les comportent.

En conséquence, un premier objet de l'invention concerne une composition de caoutchouc utilisable pour la fabrication de pneumatiques, comportant au moins (i) un élastomère diénique, (ii) une charge blanche à titre de charge renforçante, (iii) un alkoxysilane polysulfuré à titre d'agent de couplage (charge blanche/élastomère diénique) auquel sont associés (iv) un dithiophosphate de zinc et (v) un dérivé guanidique.

L'invention a également pour objet l'utilisation d'une composition de caoutchouc conforme à l'invention pour la fabrication d'articles en caoutchouc, en particulier de pneumatiques ou de produits semi-finis destinés à ces pneumatiques, ces produits semi-finis étant choisis en particulier dans le groupe constitué par les bandes de roulement, les sous-couches destinées par exemple à être placées sous ces bandes de roulement, les nappes sommet, les flancs, les nappes carcasse, les talons, les protecteurs, les chambres à air ou les gommes intérieures étanches pour pneu sans chambre. L'invention concerne plus particulièrement l'utilisation d'une telle composition de caoutchouc pour la fabrication des flancs ou des bandes de roulement, en raison de ses bonnes propriétés hystérétiques.

L'invention conceme également un procédé de préparation d'une composition conforme à l'invention, ce procédé étant caractérisé en ce qu'on incorpore par malaxage à au moins (i) un élastomère diénique, au moins (ii) une charge blanche à titre de charge renforçante, (iii) un alkoxysilane polysulfuré à titre d'agent de couplage (charge blanche/élastomère diénique), (iv) un dithiophosphate de zinc et (v) un dérivé guanidique.

La composition conforme à l'invention est particulièrement adaptée à la confection de bandes de roulement de pneumatiques destinés à équiper des véhicules de tourisme, véhicules 4x4, camionnette, deux roues et poids-lourds, avions, engins de génie civil, agraire ou de manutention, ces bandes de roulement pouvant être utilisées lors de la fabrication de pneumatiques neufs ou pour le rechapage de pneumatiques usagés.

L'invention a également pour objet ces pneumatiques et ces produits semi-finis en caoutchouc eux-mêmes, notamment les bandes de roulement, lorsqu'ils comportent une composition de caoutchouc conforme à l'invention.

L'invention concerne également, en soi, un système de couplage (charge blanche/élastomère diénique) pour composition de caoutchouc diénique renforcée d'une charge blanche, utilisable pour la fabrication de pneumatiques, ledit système étant constitué par l'association d'un alkoxysilane polysulfuré, d'un dithiophosphate de zinc et d'un dérivé guanidique.

L'invention a également pour objet l'utilisation d'un tel système de couplage (charge blanche/élastomère diénique) dans une composition de caoutchouc pour pneumatique.

L'invention a d'autre part pour objet l'utilisation en combinaison d'un dithiophosphate de zinc et d'un dérivé guanidique, dans les compositions de caoutchouc renforcées d'une charge blanche utilisables pour la fabrication de pneumatiques, pour activer la fonction de couplage (charge blanche/élastomère diénique) des alkoxysilanes polysulfurés.

L'invention ainsi que ses avantages seront aisément compris à la lumière de la description et des exemples de réalisation qui suivent, ainsi que des figures relatives à ces exemples qui représentent des courbes de variation de module en fonction de l'allongement pour différentes compositions de caoutchouc diénique, conformes ou non à l'invention.

### I. MESURES ET TESTS UTILISES

Les compositions de caoutchouc sont caractérisées avant et après cuisson, comme indiqué ci-après.

### I-1. Plasticité Mooney

On utilise un consistomètre oscillant tel que décrit dans la norme AFNOR-NFT-43005 (Novembre 1980). La mesure de plasticité Mooney se fait selon le principe suivant : la composition à l'état cru (i.e. avant cuisson) est moulée dans une enceinte cylindrique chauffée à 100°C. Après une minute de préchauffage, le rotor tourne au sein de l'éprouvette à 2 tours / minute et on mesure le couple utile pour entretenir ce mouvement après 4 minutes de rotation. La plasticité Mooney est exprimée en "unité Mooney" (UM, avec 1 UM=0,83 Newton.mètre).

### I-2. Essais de traction

Ces essais permettent de déterminer les contraintes d'élasticité et les propriétés à la rupture. Sauf indication différente, ils sont effectués conformément à la norme AFNOR-NFT-46002 de septembre 1988. On mesure en seconde élongation (i.e. après un cycle d'accommodation) les modules sécants nominaux (en MPa) à 10% d'allongement (M10), 100% d'allongement (M100) et 300% d'allongement (M300). On mesure également les contraintes à la rupture (en MPa) et les allongements à la rupture (en %). Toutes ces mesures de traction sont effectuées dans les conditions normales de température et d'hygrométrie selon la norme AFNOR-NFT-40101 (décembre 1979).

Un traitement des enregistrements de traction permet également de tracer la courbe de module en fonction de l'allongement (voir figure annexée), le module utilisé ici étant le module sécant vrai mesuré en première élongation, calculé en se ramenant à la section réelle de l'éprouvette et non à la section initiale comme précédemment pour les modules nominaux.

### I-3. Pertes hystérétiques

Les pertes hystérétiques (notées PH) sont mesurées par rebond à 60°C au 6ème choc, et exprimées en % selon la relation suivante:

PH(%) = 100[(W₀-W₁)/W₀],

avec W₀ : énergie fournie ; W₁ : énergie restituée.

### I-4. Test de "bound rubber"

Le test dit de "bound rubber" permet de déterminer la proportion d'élastomère, dans une composition non vulcanisée, qui est associée à la charge renforçante si intimement que cette proportion d'élastomère est insoluble dans les solvants organiques usuels. La connaissance de cette proportion insoluble de caoutchouc, fixée par la charge renforçante au cours du mélangeage, donne une indication quantitative sur l'activité renforçante de la charge dans la composition de caoutchouc. Une telle méthode a été décrite par exemple dans la norme NFT-45114 (juin 1989) appliquée à la détermination du taux d'élastomère lié au noir de carbone.

Ce test, bien connu de l'homme du métier pour caractériser la qualité de renforcement apportée par la charge renforçante, a par exemple été décrit dans les documents suivants: *Plastics, Rubber and Composites Processing and Applications*, Vol. 25, No7, p. 327 (1996) ; *Rubber Chemistry and Technology,* Vol. 69, p. 325 (1996).

Dans le cas présent, on mesure le taux d'élastomère non extractible au toluène, après un gonflement pendant 15 jours d'un échantillon de composition de caoutchouc (typiquement 300-350 mg) dans ce solvant (par exemple dans 80-100 cm³ de toluène), suivi d'une étape de séchage de 24 heures à 100°C, sous vide, avant pesée de l'échantillon de composition de caoutchouc ainsi traité. De préférence, l'étape de gonflement ci-dessus est conduite à la température ambiante (environ 20°C) et à l'abri de la lumière, et le solvant (toluène) est changé une fois, par exemple après les cinq premiers jours de gonflement. Le taux de "bound rubber" (% en poids) - en abrégé "T_{BR}"- est calculé de manière connue par différence entre le poids initial et le poids final de l'échantillon de composition de caoutchouc, après prise en compte et élimination, dans le calcul, de la fraction des composants insolubles par nature, autres que l'élastomère, présents initialement dans la composition de caoutchouc.

### II. CONDITIONS DE REALISATION DE L'INVENTION

Outre les additifs usuels ou ceux susceptibles d'être utilisés dans une composition de caoutchouc diénique réticulable au soufre et destinée particulièrement à la fabrication de pneumatiques, les compositions de caoutchouc selon l'invention comportent, comme constituants de base, (i) au moins un élastomère diénique, (ii) au moins une charge blanche à titre de charge renforçante, (iii) au moins un alkoxysilane polysulfuré en tant qu'agent de couplage (charge blanche/élastomère diénique) auquel sont associés, pour activer le couplage, (iv) au moins un dithiophosphate de zinc et (v) au moins un dérivé guanidique.

Le système de couplage selon l'invention est quant à lui constitué d'un agent de couplage alkoxysilane polysulfuré, de préférence majoritaire (plus de 50% en poids), et d'un activateur de couplage formé par l'association d'un dithiophosphate de zinc et d'un dérivé guanidique.

### II-1. Elastomère diénique

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend en particulier par élastomère diénique susceptible d'être mis en oeuvre dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention, en particulier lorsque la composition de caoutchouc est destinée à une bande de roulement de pneumatique, est en premier lieu mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

De manière particulièrement préférentielle, l'élastomère diénique de la composition conforme à l'invention est choisi dans le groupe des élastomères diéniques fortement insaturés constitué par les polybutadiènes (BR), les polyisoprènes (IR) ou du caoutchouc naturel (NR), les copolymères de butadiène-styrène (SBR), les copolymères de butadiène-isoprène (BIR), les copolymères d'isoprène-styrène (SIR), les copolymères de butadiène-styrène-isoprène (SBIR) ou un mélange de deux ou plus de ces composés.

La composition conforme à l'invention est préférentiellement destinée à une bande de roulement pour pneumatique. Dans un tel cas, l'élastomère diénique est de préférence un copolymère de butadiène-styrène utilisé éventuellement en mélange avec un polybutadiène ; plus préférentiellement encore, l'élastomère diénique est un SBR préparé en solution ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, ce copolymère SBR étant éventuellement utilisé en mélange avec un polybutadiène possèdant de préférence plus de 90% de liaisons cis-1,4.

Bien entendu, les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge renforçante

La charge blanche (parfois appelée aussi charge "claire") utilisée à titre de charge renforçante peut constituer la totalité ou une partie seulement de la charge renforçante totale, dans ce dernier cas associée par exemple à du noir de carbone.

De préférence, dans les compositions de caoutchouc conformes à l'invention, la charge blanche renforçante constitue la majorité, i.e. plus de 50 % en poids de la charge renforçante totale, plus préférentiellement plus de 80 % en poids de cette charge renforçante totale.

Dans la présente demande, on entend par charge blanche "renforçante" une charge blanche capable de renforcer à elle seule, sans autre moyen qu'un agent de couplage intermédiaire, une composition de caoutchouc destinée à la fabrication de pneumatiques, en d'autres termes capable de remplacer dans sa fonction de renforcement une charge conventionnelle de noir de carbone.

Préférentiellement, la charge blanche renforçante est une charge minérale du type silice (SiO₂) ou alumine (Al₂O₃), ou un mélange de ces deux charges. La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées, en particulier lorsque l'invention est mise en oeuvre pour la fabrication de pneumatiques présentant une faible résistance au roulement. Par silice hautement dispersible, on entend toute silice ayant une aptitude très importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer la silice Perkasil KS 430 de la société Akzo, les silices BV3380 et Ultrasil 7000 de la société Degussa, les silices Zeosil 1165 MP et 1115 MP de la société Rhodia, la silice Hi-Sil 2000 de la société PPG, les silices Zeopol 8715, 8741 ou 8745 de la Société Huber, des silices précipitées traitées telles que par exemple les silices "dopées" à l'aluminium décrites dans la demande EP-A-0 735 088. Si une alumine renforçante est utilisée, il s'agit préférentiellement d'une alumine hautement dispersible telle que décrite dans la demande EP-A-0 810 258 précitée, par exemple des alumines A125 ou CR125 (société Baïkowski), APA-100RDX (société Condéa), Aluminoxid C (société Degussa) ou AKP-G015 (Sumitomo Chemicals).

L'état physique sous lequel se présente la charge blanche renforçante est indifférent, que ce soit sous forme de poudre, de microperles, de granulés, ou encore de billes. Bien entendu on entend également par charge blanche renforçante des mélanges de différentes charges blanches renforçantes, en particulier de silices hautement dispersibles telles que décrites ci-dessus.

La charge blanche renforçante peut être également utilisée en coupage (mélange) avec du noir de carbone. Comme noirs de carbone conviennent tous les noirs de carbone, notamment les noirs du type HAF, ISAF, SAF, conventionnellement utilisés dans les pneus et particulièrement dans les bandes de roulement des pneus. A titre d'exemples non limitatifs de tels noirs, on peut citer les noirs N115, N134, N234, N339, N347, N375. La quantité de noir de carbone présente dans la charge renforçante totale peut varier dans de larges limites, cette quantité étant préférentiellement inférieure à la quantité de charge blanche renforçante présente dans la composition de caoutchouc .

De manière préférentielle, le taux de charge renforçante totale (charge blanche renforçante plus noir de carbone le cas échéant) est compris dans un domaine allant de 20 à 300 pce, plus préférentiellement de 30 à 150 pce, encore plus préférentiellement de 50 à 130 pce (parties en poids pour cent d'élastomère), l'optimum étant différent selon la nature de la charge blanche renforçante utilisée et selon les applications visées : le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que poids lourd.

### II-3. Agent de couplage

L'agent de couplage utilisé dans les compositions de caoutchouc conformes à l'invention est un alkoxysilane polysulfuré, porteur de manière connue de deux types de fonctions notées ici "Y" et "X". greffable d'une part sur la charge blanche au moyen de la fonction "Y" (fonction alkoxysilyle) et d'autre part sur l'élastomère au moyen de la fonction "X" (fonction soufrée).

Les alkoxysilanes polysulfurés sont largement connus de l'homme du métier comme agents de couplage (charge blanche/élastomère diénique) dans les compositions de caoutchouc destinées à la fabrication de pneumatiques ; on se reportera notamment aux brevets US-A-3 842 111, US-A-3 873 489, US-A-3 978 103, US-A-3 997 581 déjà cités, ou aux brevets plus récents US-A-5 580 919, US-A-5 583 245, US-A-5 663 396, US-A-5 684 171, US-A-5 684 172, US-A-5 696 197 qui décrivent en détail de tels composés connus.

Conviennent en particulier pour la mise en oeuvre de l'invention, sans que la définition ci-après soit limitative, des alkoxysilanes polysulfurés dits "symétriques" répondant à la formule générale (I) suivante:

(I) Z - A - Sₙ - A - Z ,

dans laquelle:
- n est un entier de 2 à 8;
- A est un radical hydrocarboné divalent;
- Z répond à l'une des formules ci-après: 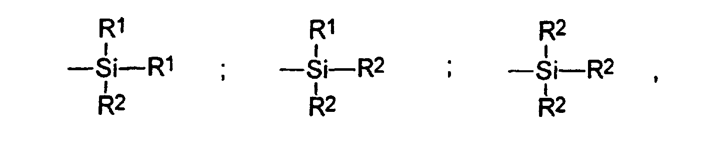
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C_{18;}
- les radicaux R², substitués ou non substitués, identiques ou différents entre eux, représentent un groupe alkoxyle en C₁-C₁₈ ou cycloalkoxyle en C₅-C₁₈.

Dans la formule (I) ci-dessus, le nombre n est de préférence un nombre entier de 2 à 5.

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 3 et 5, plus préférentiellement proche de 4. Mais l'invention peut être aussi avantageusement mise en oeuvre par exemple avec des alkoxysilanes disulfurés (n=2).

Le radical A, substitué ou non substitué, est de préférence un radical hydrocarboné divalent, saturé ou non saturé, comportant de 1 à 18 atomes de carbone. Conviennent notamment des groupements alkylène en C₁-C₁₈ ou des groupements arylène en C₆-C₁₂, plus particulièrement des alkylènes en C₁-C₁₀, notamment en C₂-C₄, en particulier le propylène.

Les radicaux R¹ sont préférentiellement des groupes alkyle en C₁-C₆, cyclohexyle ou phényle, notamment des groupes alkyle en C₁-C₄, plus particulièrement le méthyle et/ou l'éthyle.

Les radicaux R² sont préférentiellement des groupes alkoxyle en C₁-C₈ ou cycloalkoxyle en C₅-C₈, plus particulièrement le méthoxyle et/ou l'éthoxyle.

De tels alkoxysilanes polysulfurés dits "symétriques", ainsi que certains de leurs procédés d'obtention sont par exemple décrits dans les brevets récents US-A-5 684 171 et US-A-5 684 172 donnant une liste détaillée de ces composés connus, pour n variant de 2 à 8.

Préférentiellement, l'alkoxysilane polysulfuré mis en oeuvre dans l'invention est un polysulfure, en particulier un disulfure ou un tétrasulfure, de bis(alkoxyl(C₁-C₄)silylpropyle), plus préférentiellement de bis(trialkoxyl(C₁-C₄)silylpropyle), notamment de bis(3-triéthoxysilylpropyle) ou de bis(3-triméthoxysilylpropyle). A titre d'exemple, le disulfure de bis(triéthoxysilylpropyle) ou TESPD, de formule [(C₂H₅O)₃Si(CH₂)₃S]₂, est commercialisé par exemple par la société Degussa sous les dénominations Si266 ou Si75 (dans le second cas, sous forme d'un mélange de disulfure (à 75% en poids) et de polysulfure), ou encore par la société Witco sous la dénomination Silquest A1589. Le tétrasulfure de bis(triéthoxysilylpropyle) ou TESPT, de formule [(C₂H₅O)₃Si(CH₂)₃S₂]₂, est commercialisé par exemple par la société Degussa sous la dénomination Si69 (ou X50S lorsqu'il est supporté par exemple par la société Degussa sous la dénomination Si69 (ou X50S lorsqu'il est supporté à 50% en poids sur du noir de carbone), ou encore par la société Witco sous la dénomination Silquest A1289 (dans les deux cas mélange commercial de polysulfures avec une valeur moyenne pour n qui est proche de 4).

On utilise tout préférentiellement le TESPT. Mais un mode de réalisation avantageux de l'invention consiste à utiliser le TESPD, certes moins actif que le TESPT lorsqu'il est utilisé seul, mais dont l'efficacité est sensiblement améliorée par la présence du dithiophosphate de zinc et du dérivé guanidique.

Dans les compositions de caoutchoucs conformes à l'invention, la teneur en alkoxysilane polysulfuré peut être comprise dans un domaine de 0,5 à 15% par rapport au poids de charge blanche renforçante, mais il est en général souhaitable d'en utiliser le moins possible. La présence de dithiophosphate de zinc et de dérivé guanidique, dans ces compositions, permet avantageusement de pouvoir utiliser l'alkoxysilane polysulfuré à un taux préférentiel inférieur à 8%, plus préférentiellement encore inférieur à 6% par rapport au poids de charge blanche renforçante ; des taux compris entre 3% et 6% sont par exemple possibles.

Bien entendu, l'alkoxysilane polysulfuré pourrait être préalablement greffé (via la fonction "X") sur l'élastomère diénique de la composition de l'invention, l'élastomère ainsi fonctionnalisé ou "précouplé" comportant alors la fonction "Y" libre pour la charge blanche renforçante. L'alkoxysilane polysulfuré pourrait également être préalablement greffé (via la fonction "Y") sur la charge blanche renforçante, la charge ainsi "précouplée" pouvant ensuite être liée à l'élastomère diénique par l'intermédiaire de la fonction libre "X".

On préfère toutefois, notamment pour des raisons de meilleure mise en oeuvre des compositions à l'état cru, utiliser l'agent de couplage soit greffé sur la charge blanche renforçante, soit à l'état libre (i.e., non greffé) comme le dithiophosphate de zinc et le dérivé guanidique qui lui sont associés dans le système de couplage conforme à l'invention.

### II-4. Activation du couplage

Le système de couplage selon l'invention est constitué de l'agent de couplage alkoxysilane polysulfuré précédemment défini et d'un activateur de couplage de cet alkoxysilane. Par "activateur" de couplage, on entend ici un corps (un composé ou une association de composés) qui, mélangé avec un agent de couplage, augmente l'efficacité de ce dernier.

L'activateur de couplage utilisé conformément à l'invention est formé par l'association d'un dithiophosphate de zinc et d'un dérivé guanidique.

### A) Dithiophosphate de zinc

Le dithiophosphate de zinc (en abrégé "DTPZn") est un composé bien connu répondant à la formule suivante (II):

(R³O)₂ (S) P - S - Zn - S - P (S) (OR³)₂ ,

soit sous forme développée: 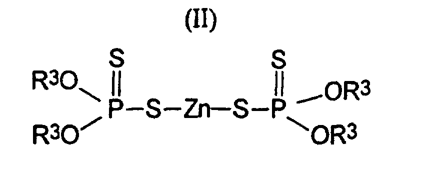 formule connue dans laquelle les radicaux R³, identiques ou différents, représentent l'hydrogène ou un groupement hydrocarboné monovalent.

De préférence, ce groupement hydrocarboné monovalent comporte de 1 à 18 atomes de carbone. Plus préférentiellement, les radicaux R³ sont des groupes alkyle ou cycloalkyle, linéaires ou ramifiés, substitués ou non substitués, comportant de 1 à 12 atomes de carbone, notamment des groupes alkyle en C₂-C₈ ou cycloalkyle en C₅-C₁₂. Parmi ces groupes alkyle préférentiels, on citera en particulier l'éthyle, le propyle, l'isopropyle, le butyle, l'isobutyle, le cyclohexyle, plus particulièrement les alkyles en C₃-C₄.

Le DTPZn était essentiellement connu jusqu'ici comme additif de lubrification dans le domaine de la métallurgie (voir par exemple GB-A-1 066 576, EP-A-15 824, EP-A-769 545, US-A-5 716 913, WO96/37581), ou comme ultra-accélérateur de vulcanisation dans des compositions de caoutchoucs essentiellement saturés du type EPDM destinés par exemple à des bandes transporteuses, des tuyaux ou des membranes de cuisson (voir par exemple FR-A-1 556 085, EP-A-692 518 ou CA-A-2 153 509), voire même, mais plus rarement, dans des compositions de caoutchoucs diéniques pour pneumatiques (voir par exemple *Chemical Abstracts* vol 89, n°26, abstract n° 216568 (25/12/78) ; *Chemical Abstracts* vol 114, n°6, abstract n° 44671 (11/02/91) : demande JP 1998/151906 ; EP-A-0 832 920).

On a trouvé, de manière surprenante, qu'un dithiophosphate de zinc en faible quantité, combiné à un dérivé guanidique, exerce, dans les compositions de caoutchouc de l'invention renforcées d'une charge blanche, une fonction très avantageuse d'activateur de couplage vis-à-vis des alkoxysilanes polysulfurés. Ce résultat est d'autant plus inattendu pour l'homme du métier que les propriétés connues d'ultra-accélérateur du DTPZn en faisaient plutôt un composant a priori incompatible avec les élastomères diéniques essentiellement insaturés utilisés dans les compositions de caoutchouc destinées à la fabrication des pneumatiques, en raison notamment des problèmes de grillage ("scorching") décrits précédemment.

Comme exemples de DTPZn, on citera par exemple les dialkyldithiophosphates de zinc commercialisés par la société Rhein-Chemie (Allemagne) sous les dénominations Rhenocure TP/G et TP/S (mélanges de di-isopropyl- et de di-isobutyl-dithiophosphates), le produit commercialisé par la société Monsanto sous la dénomination Vocol S (dibutyldithiophosphate), ou encore ceux décrits dans les demandes de brevets EP-A-692 518 ou CA-A-2 153 509 citées ci-dessus.

L'homme du métier saura ajuster la teneur optimale en DTPZn en fonction de l'application visée, de l'élastomère diénique choisi, des taux de charge blanche renforçante, d'alkoxysilane polysulfuré et de dérivé guanidique utilisés, dans un domaine compris de préférence entre 0,25 et 3 pce, plus préférentiellement entre 0,5 et 1,5 pce ; des taux compris entre 0,5 et 1 pce sont avantageusement possibles.

Bien entendu, la teneur optimale en DTPZn sera choisie, en premier lieu, en fonction de la quantité d'alkoxysilane polysulfuré utilisée. Préférentiellement, dans le système de couplage selon l'invention, la quantité de DTPZn représente entre 5% et 60% par rapport au poids d'alkoxysilane polysulfuré. En dessous du taux minimal indiqué, l'effet risque d'être insuffisant, alors qu'au delà du taux maximal indiqué on n'observe généralement plus d'amélioration du couplage alors que les coûts de la composition augmentent et que l'on risque d'autre part d'être exposé aux risques de grillage évoqués précédemment. Pour ces différentes raisons, la quantité de dithiophosphate de zinc représente plus préférentiellement entre 10% et 40% par rapport au poids d'alkoxysilane polysulfuré.

D'autre part, dans les compositions de caoutchouc selon l'invention, la quantité totale d'aikoxysilane polysulfuré et de dithiophosphate de zinc représente de préférence moins de 10%, plus préférentiellement moins de 8% par rapport au poids de charge blanche renforçante ; plus préférentiellement encore, cette quantité peut être comprise entre 4% et 8% par rapport au poids de charge blanche renforçante.

### B) Dérivé guanidique

Le second composant nécessaire à l'activation du couplage est un dérivé guanidique, c'est-à-dire une guanidine substituée. Les guanidines substituées sont bien connues de l'homme du métier, en particulier comme agents de vulcanisation, et ont été décrites dans de nombreux documents (voir par exemple *"Vulcanization and vulcanizing agents"* by W. Hofmann, Ed. MacLaren and Sons Ltd (London), 1967, pp. 180-182; EP-A-0 683 203 ou US-A-5 569 721).

Dans les compositions conformes à l'invention, on utilise de préférence la N,N'-diphénylguanidine (en abrégé "DPG") répondant à la formule particulière (IV-1) ci-dessous:

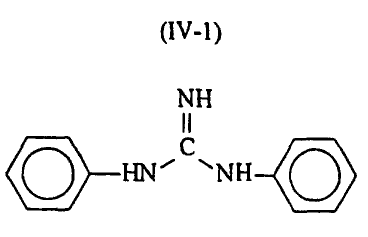

Mais on peut aussi utiliser des dérivés guanidiques autres que la DPG, en particulier d'autres dérivés guanidiques aromatiques répondant à la formule générale (IV-2) ci-dessous: 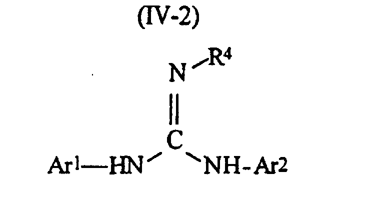 dans laquelle Ar¹et Ar² représentent un groupement aryle, substitué ou non substitué, de préférence un groupement phényle, et R⁴ représente un hydrogène ou un groupement hydrocarboné. A titre d'exemples de composés répondant à la formule (IV-2) ci-dessus, on peut citer, outre la DPG déjà mentionnée, la triphénylguanidine ou encore la di-o-tolylguanidine.

Dans les compositions conformes à l'invention, la quantité de dérivé guanidique représente de préférence entre 0,5% et 4%, plus préférentiellement entre 1% et 3%, par rapport au poids de charge blanche renforçante, soit de préférence entre 0,25 et 4 pce, plus préférentiellement entre 0,5 et 2 pce. En dessous des minima indiqués l'effet d'activation risque d'être insuffisant, alors qu'au-delà des maxima indiqués on n'observe généralement plus d'amélioration du couplage, tout en s'exposant à des risques de grillage.

De préférence, dans les compositions conformes à l'invention, le taux de système de couplage selon l'invention, constitué par l'agent de couplage alkoxysilane polysulfuré et l'activateur de couplage (dithiophosphate de zinc + dérivé guanidique), représente entre 2% et 20% par rapport au poids de charge blanche renforçante, plus préférentiellement entre 5% et 15%. Dans la plupart des cas, le système de couplage conforme à l'invention s'est avéré suffisamment performant, pour les besoins des compositions de caoutchouc conformes à l'invention destinées à la fabrication de pneumatiques, pour un taux inférieur à 12% par rapport au poids de charge blanche renforçante, voire même inférieur à 10%. Des taux compris entre 5% et 10% sont par exemple avantageusement possibles dans les compositions de caoutchouc destinées aux bandes de roulement de pneumatiques pour véhicules tourisme. Par rapport au poids d'élastomère(s) diénique(s) présent(s) dans les compositions de caoutchouc conformes à l'invention, le taux de système de couplage selon l'invention est de préférence compris entre 1 et 10 pce, plus préférentiellement entre 4 et 8 pce.

### II-5. Additifs divers

Bien entendu, les compositions de caoutchouc conformes à l'invention comportent également tout ou partie des additifs habituellement utilisés dans les compositions de caoutchouc diénique réticulables au soufre et destinées à la fabrication de pneumatiques, comme par exemple des plastifiants, des pigments, des agents de protection du type antioxydants, antiozonants, un système de réticulation à base soit de soufre, soit de donneurs de soufre et/ou de peroxyde et/ou de bismaléimides, des accélérateurs de vulcanisation, des activateurs de vulcanisation, des huiles d'extension, etc... A la charge blanche renforçante peut être également associée, si besoin est, une charge blanche conventionnelle non renforçante, comme par exemple des particules d'argile, de bentonite, talc, craie, kaolin, oxydes de titane.

Les compositions conformes à l'invention peuvent également contenir, en complément des alkoxysilanes polysulfurés, des agents de recouvrement (comportant par exemple la seule fonction Y) de la charge blanche renforçante ou plus généralement des agents d'aide à la mise en oeuvre susceptibles de manière connue, grâce à une amélioration de la dispersion de la charge blanche dans la matrice de caoutchouc et à un abaissement de la viscosité des compositions, d'améliorer leur faculté de mise en oeuvre à l'état cru, ces agents étant par exemple des alkylalkoxysilanes (notamment des alkyltriéthoxysilanes), des polyols, des polyéthers (par exemple des polyéthylèneglycols), des amines primaires, secondaires ou tertiaires, des polyorganosiloxanes hydroxylés ou hydrolysables, par exemple des α,ω-dihydroxy-polyorganosiloxanes (notamment des α,ω-dihydroxy-polydiméthylsiloxanes). Ces compositions pourraient contenir, en plus, des agents de couplage autres que des alkoxysilanes polysulfurés.

### II-6. Préparation des compositions de caoutchouc

Les compositions sont fabriquées dans des mélangeurs appropriés, en utilisant deux phases de préparation successives selon une procédure bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation ; de telles phases ont été décrites par exemple dans la demande EP-A-0 501 227 précitée.

Selon un mode de réalisation préférentiel de l'invention, tous les constituants de base des compositions conformes à l'invention, à savoir (ii) la charge blanche renforçante et le système de couplage selon l'invention constitué par l'association de (iii) l'alkoxysilane polysulfuré, du (iv) dithiophosphate de zinc et du (v) dérivé guanidique, sont incorporés à (i) l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires y compris le système de couplage selon l'invention, les éventuels agents de recouvrement ou de mise en oeuvre complémentaires et autres additifs divers, à l'exception du système de vulcanisation. Une seconde étape de travail thermomécanique peut être ajoutée, dans ce mélangeur interne, par exemple après une étape de refroidissement intermédiaire (de préférence à une température inférieure à 100°C), dans le but de faire subir aux compositions un traitement thermique complémentaire, notamment pour améliorer encore la dispersion, dans la matrice élastomérique, de la charge blanche renforçante et de son système de couplage.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée par exemple sous la forme d'une feuille, d'une plaque ou encore d'un profilé de caoutchouc utilisable pour la fabrication de semi-finis tels que des bandes de roulement.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

Il va de soi que l'invention concerne les compositions de caoutchouc précédemment décrites tant à l'état cru (i.e., avant cuisson) qu'à l'état cuit (i.e., après réticulation ou vulcanisation).

Bien entendu, les compositions conformes à l'invention peuvent être utilisées seules ou en coupage avec toute autre composition de caoutchouc utilisable pour la fabrication de pneumatiques.

### III. EXEMPLES DE REALISATION DE L'INVENTION

### III-1. Préparation des compositions de caoutchouc

On procède pour les essais qui suivent de la manière suivante: on introduit dans un mélangeur interne, rempli à 70 % et dont la température initiale de cuve est d'environ 60°C, successivement la charge renforçante, le système de couplage selon l'invention, l'élastomère diénique ou le mélange d'élastomères diéniques, puis les divers autres ingrédients, à l'exception du système de vulcanisation. On conduit alors un travail thermomécanique (phase non-productive) en une étape, qui dure environ 3 à 4 minutes, jusqu'à atteindre une température maximale de "tombée" de 165°C.

On récupère le mélange ainsi obtenu, on le refroidit puis on incorpore soufre et sulfénamide de manière connue, sur un mélangeur exteme (homo-finisseur) à 30°C, en mélangeant le tout (phase productive) pendant un temps approprié, compris entre 5 et 12 minutes selon les cas.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement.

Dans les essais qui suivent, la charge blanche renforçante (silice hautement dispersible) constitue la totalité de la charge renforçante, mais il va de soi qu'une fraction de cette dernière, de préférence minoritaire, pourrait être remplacée par du noir de carbone.

### III-2. Essais

### A) Essai 1

On compare cinq compositions de caoutchouc (élastomère SBR) renforcées de silice destinées à la fabrication de pneumatiques ou de bandes de roulement pour pneumatiques. L'élastomère SBR (copolymère de styrène-butadiène) est préparé en solution, et comprend 25% de styrène, 58% de motifs polybutadiène 1-2 et 22% de motifs polybutadiène 1-4 trans.

Ces cinq compositions sont identiques aux différences près qui suivent:
- composition N°1: pas d'agent de couplage;
- composition N°2: TESPT (4 pce);
- composition N°3: TESPT (2,8 pce);
- composition N°4: TESPT (2,8 pce) auquel est associé du DTPZn (1 pce, soit 35,7% par rapport au poids de silane);
- composition N°5: pas d'agent de couplage, DTPZn seul (1 pce).

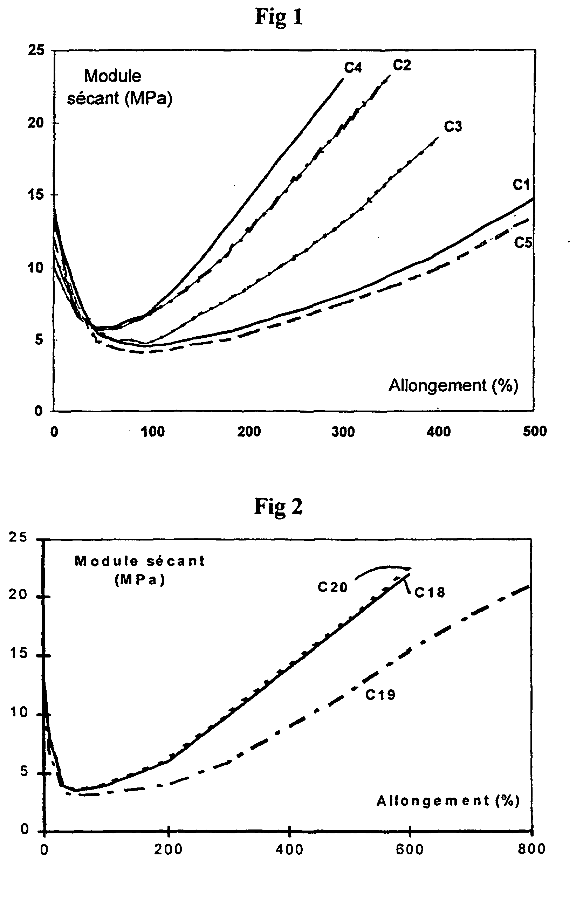

Chaque composition comporte en outre 1,5 pce de dérivé guanidique (soit 3% par rapport au poids de charge blanche renforçante). Seule la composition N°4 est donc conforme à l'invention ; la composition N°1 est la composition de base dépourvue d'agent de couplage, alors que la composition N°2 représente la référence de l'art antérieur. Les tableaux 1 et 2 donnent successivement la formulation des différentes compositions (tableau 1 - taux des différents produits exprimés en pce), leurs propriétés avant et après cuisson (150°C, 40 minutes). La figure 1 reproduit quant à elle les courbes de module (en MPa) en fonction de l'allongement (en %) ; ces courbes sont notées C1 à C5 et correspondent respectivement aux compositions de caoutchouc N°1 à N°5.

Dans la composition N°2 selon l'art antérieur, on note que le taux de TESPT représente 8% par rapport au poids de charge blanche renforçante, ce qui représente déjà un taux relativement faible par rapport aux taux usuels pratiqués pour ce type d'agent de couplage ; ce taux relativement faible de 8% est toutefois supérieur de plus de 40% au taux de TESPT dans la composition N°4 conforme à l'invention. Pour cette composition N°4, la quantité d'alkoxysilane polysulfuré représente moins de 6% (précisément 5,6%) et le total (TESPT+DTPZn) représente lui aussi, de manière avantageuse, moins de 8% (précisément 7,6%) par rapport au poids de charge blanche renforçante ; quant au taux du système de couplage lui-même (TESPT+DTPZn+DPG), il représente moins de 12% (précisément 10.6%) par rapport au poids de charge blanche renforçante.

L'étude des différents résultats montre que la composition N°4 conforme à l'invention, comparée à la composition de référence N°2, présente des performances équivalentes voire supérieures, malgré un taux de TESPT nettement plus bas:
- viscosité Mooney basse (95 UM dans les deux cas), indicatrice de bonnes capacités de mise en oeuvre à l'état cru, pour chacune des deux compositions;
- T_{BR} plus élevé, ce qui indique un haut niveau de renforcement de l'élastomère par la charge blanche renforçante;
- faibles pertes hystérétiques (PH) dans les deux cas, avec un résultat légèrement meilleur pour la composition conforme à l'invention;
- des propriétés à la rupture équivalentes.

Une comparaison des résultats obtenus entre la composition N°2 et les compositions N°3 (taux de TESPT réduit à 2,8 pce, mais sans DTPZn) d'une part, N°5 (DTPZn et DPG seuls sans agent de couplage) d'autre part, démontre par ailleurs l'effet synergique obtenu entre l'alkoxysilane polysulfuré, le dithiophosphate de zinc et le dérivé guanidique : le TESPT, en présence de DPG, montre, pour un taux de 2,8 pce, une performance insuffisante (comparer composition N°3 avec compositions N°1 et N°2), alors que le DTPZn et le dérivé guanidique utilisés seuls, sans agent de couplage, n'ont aucun effet de liaison entre l'élastomère et la charge blanche renforçante (comparer compositions N°5 et N°1) et ne modifient en rien les propriétés de la composition N°1 de base. Seule la combinaison des trois produits (TESPT+DTPZn+DPG) permet d'obtenir l'effet technique recherché.

La figure 1 annexée confirme bien les observations précédentes. Les valeurs de module, pour des allongements de 100% et plus, sont maximales sur la composition N°4 (courbe C4) conforme à l'invention, supérieures à celles observées sur la composition N°2 de référence (courbe C2) ; quant aux courbes C1, C3 et C5, elles sont situées nettement en dessous ; pour un tel domaine d'allongements, ce comportement illustre une meilleure interaction entre la charge renforçante et l'élastomère, en d'autres termes un effet de renforcement maximal, grâce au système de couplage de l'invention.

### B) Essai 2

On compare trois compositions de caoutchouc (mélange d'élastomères SBR et BR) renforcées de silice destinées également à la fabrication de pneumatiques ou de bandes de roulement pour pneumatiques.

Ces trois compositions sont identiques aux différences près qui suivent:
- composition N°6: TESPT (6,4 pce);
- composition N°7: TESPT (4,5 pce) auquel est associé du DTPZn (0,75 pce, soit 16,7% par rapport au poids de TESPT);
- composition N°8: TESPT (3,2 pce) auquel est associé du DTPZn (0,75 pce, soit 23,4% par rapport au poids de TESPT);

Chaque composition comporte en outre 1,5 pce de dérivé guanidique (soit environ 1,9% par rapport au poids de charge blanche renforçante). La composition N°6 est le témoin de cet essai, elle contient un taux de TESPT de 8% par rapport au poids de charge blanche renforçante (6,4 pce de TESPT pour 80 pce de silice). Les compositions N°7 et N°8, conformes à l'invention, contiennent quant à elles un taux de TESPT nettement inférieur à celui de la composition N°6, dans les deux cas inférieur à 6% par rapport au poids de charge blanche renforçante (5,6% et 4% respectivement).

Les tableaux 3 et 4 donnent la formulation des différentes compositions, leurs propriétés avant et après cuisson (150°C, 40 minutes).

Pour les compositions conformes à l'invention N°7 et N°8, la quantité (TESPT+DTPZn) est respectivement de 6,6% et 4,9% par rapport au poids de charge blanche renforçante, et donc reste avantageusement inférieur au taux de 8% utilisé pour le TESPT seul dans la composition de l'art antérieur. Quant au taux de système de couplage lui-même, constitué par l'association de l'alkoxysilane polysulfuré, du dithiophosphate de zinc et du dérivé guanidique, il représente avantageusement moins de 10% (précisément 8,4%) pour la composition N°7, et moins de 8% (précisément 6,8%) pour la composition N°8, par rapport au poids de charge blanche renforçante.

L'examen des résultats du tableau 4 montre que la composition N°7, comparée à la composition témoin N°6, cumule les avantages d'une mise en oeuvre améliorée (baisse de la viscosité à l'état cru) et un niveau de renforcement amélioré (T_{BR}, M100, M300, rapport M300/M100 plus élevés) ; les propriétés à la rupture sont équivalentes, et les propriétés d'hystérèse légèrement meilleures.

Quant à la composition N°8, comparée à la composition témoin N°6, on note que les propriétés mesurées après cuisson sont rigoureusement équivalentes à celles de la composition témoin qui comporte pourtant deux fois plus de TESPT. Certes, la viscosité à l'état cru est augmentée, mais, si nécessaire, ceci peut être corrigé aisément par l'homme du métier en ajoutant par exemple un agent de mise en oeuvre tel qu'un plastifiant ou un agent de recouvrement de la charge blanche renforçante, lors de la fabrication de la composition.

### C) Essai 3

On compare ici deux compositions à base de caoutchouc naturel renforcées de silice, utilisables pour la fabrication de pneumatiques ou de produits semi-finis pour pneumatiques tels que des bandes de roulement.

Ces deux compositions sont identiques aux différences près qui suivent:
- composition N°9: TESPT (6,4 pce);
- composition N°10: TESPT (4,5 pce) auquel est associé du DTPZn (0,75 pce, soit 16,7% par rapport au poids de TESPT).

Chaque composition comporte en outre 1,5 pce de dérivé guanidique. La composition N°10 est donc conforme à l'invention, tandis que la composition N°9 constitue le témoin de cet essai. Les tableaux 5 et 6 donnent la formulation des différentes compositions, leurs propriétés avant et après cuisson (150°C, 40 minutes).

Comme pour les essais précédents, le taux de TESPT, exprimé en % par rapport au poids de charge blanche renforçante, est fortement diminué entre la composition témoin N°9 et la composition selon l'invention N°10: on passe en effet de 8% (6,4 pce de TESPT pour 80 pce de silice) à 5,6% (4,5 pce de TESPT). De manière avantageuse, on note que la quantité totale d'alkoxysilane polysulfuré et de DTPZn (4,5+0,75=5,25 pce) représente moins de 8% (précisément 6,6%) et le taux de système de couplage lui-même (TESPT+DTPZn+DPG) moins de 10% (précisément 8,4%) par rapport au poids de charge blanche renforçante (80 pce), dans la composition conforme à l'invention.

Malgré cette diminution très sensible de la quantité de TESPT, on note une fois de plus que la composition conforme à l'invention possède des propriétés au moins égales sinon supérieures à celles de la composition témoin (voir tableau 6): viscosité équivalente voire légèrement plus basse à l'état cru ; propriétés de renforcement au moins égales ou supérieures (valeurs M100 et M300 sensiblement identiques, rapport M300/M100 supérieur, T_{BR} plus élevé) ; meilleure hystérèse (PH légèrement plus faible) ; et enfin propriétés à la rupture équivalentes.

### D) Essai 4

Cet essai démontre que la présence d'un dérivé guanidique est une caractéristique essentielle dans le système de couplage selon l'invention.

On compare quatre compositions de caoutchouc identiques aux différences près qui suivent:
- composition N°11: TESPT (6,4 pce) avec dérivé guanidique mais sans DTPZn;
- composition N°12: TESPT (4,5 pce) activé par 0,75 pce de DTPZn (soit 16,7% par rapport au poids de TESPT) et 0,75 pce de dérivé guanidique (DPG);
- composition N°13: TESPT (4,5 pce) activé par 0,75 pce de DTPZn et 1,5 pce de dérivé guanidique;
- composition N°14: TESPT (4,5 pce) avec DTPZn (0,75 pce) mais sans dérivé guanidique.

La composition N°11 est le témoin de cet essai et contient 8% en poids d'alkoxysilane polysulfuré par rapport au poids de charge blanche renforçante, ce qui représente déjà comme précédemment indiqué un taux relativement faible par rapport aux taux usuels. Malgré cela, le taux d'agent de couplage a été réduit, dans les compositions conformes à l'invention N°12 et N°13, de 30% par rapport à la composition témoin.

Les tableaux 7 et 8 donnent la formulation des différentes compositions, leurs propriétés avant et après cuisson (150°C, 40 minutes). Dans les compositions conformes à l'invention, la quantité d'alkoxysilane polysulfuré représente avantageusement moins de 6% (précisément 5.6%), la quantité (TESPT+DTPZn) représente moins de 8% (précisément 6,6%), et la quantité du système de couplage lui-même (TESPT+DTPZn+DPG) représente avantageusement moins de 10% (précisément 8,4% dans la composition N°13), voire même moins de 8% (précisément 7,5% dans la composition N°12), ces différents % étant calculés par rapport au poids de charge blanche renforçante.

L'étude des différents résultats montre que les compositions N°12 et N°13 conformes à l'invention, comparées à la composition témoin N°11, présentent à l'état cru une viscosité Mooney équivalente ou supérieure mais toujours satisfaisante, un taux de "bound rubber" supérieur. et à l'état cuit dès propriétés au moins égales sinon supérieures : voir valeurs de modules M100 et M300, rapport M300/M100 et pertes PH ; tout ceci illustre un couplage (charge blanche/élastomère diénique) de haute qualité dans les compositions conformes à l'invention, malgré un taux d'alkoxysilane polysulfuré très nettement inférieur.

A taux identique de dérivé guanidique (1,5 pce), la composition conforme à l'invention N°13 s'avère même sensiblement meilleure (voir taux de "bound rubber", valeurs M100, M300, M300/M100, pertes PH) que la composition témoin N°11 qui contient pourtant un taux d'alkoxysilane polysulfuré supérieur de plus de 40%.

Quant à la composition N°14, dépourvue de dérivé guanidique, on note que ces propriétés sont dégradées par rapport à celles des compositions de l'invention N°12 et N°13, tant à l'état cru qu'après cuisson (viscosité plus élevée, T_{BR} inférieur, pertes PH plus importantes, niveau de renforcement inférieur d'après les valeurs M100, M300 et rapport M300/M100), malgré un taux identique (4,5 pce) d'agent de couplage TESPT et la présence de dithiophosphate de zinc. Clairement, en l'absence de dérivé guanidique, le dithiophosphate de zinc n'a aucun effet d'activation sur l'agent de couplage.

### E) Essai 5

Cet essai démontre qu'il est en préférable, lors de la fabrication des compositions de l'invention, d'incorporer le dérivé guanidique à l'élastomère avec la charge blanche renforçante et le reste du système de couplage (alkoxysilane polysulfuré et dithiophosphate de zinc), lors de la première phase de travail thermomécanique (phase non-productive), et non plus tard avec le système de vulcanisation (phase productive).

On prépare pour cela trois compositions de caoutchouc conformes à l'invention, de formulations rigoureusement identiques, comportant notamment 4,5 pce de TESPT, 1 pce de DTPZn (soit 22% environ par rapport au poids d'alkoxysilane) et 1,5 pce de dérivé guanidique.

La différence entre ces trois compositions réside seulement dans leur procédé de fabrication. Pour les compositions N°15 et N°16, le dérivé guanidique a été incorporé à l'élastomère avec la charge blanche renforçante et le reste du système de couplage, c'est-à-dire dans le mélangeur interne (phase non-productive), au cours de la même étape de malaxage thermomécanique, selon le schéma suivant : en même temps que la charge, l'alkoxysilane et le dithiophosphate de zinc dans le cas de la composition N°15, avec un léger décalage dans le temps dans le cas de la composition N°16 (alkoxysilane et dithiophosphate de zinc en même temps que la charge, dérivé guanidique une minute plus tard). Dans le cas de la composition N°17, le dérivé guanidique a été incorporé dans le mélangeur externe avec le système de vulcanisation (soufre et sulfénamide), au cours de la phase productive, c'est-à-dire de manière conventionnelle pour un tel accélérateur de vulcanisation.

Les tableaux 9 et 10 donnent la formulation des différentes compositions, leurs propriétés avant et après cuisson (150°C, 40 minutes). Dans ces compositions conformes à l'invention, on note que la quantité d'alkoxysilane polysulfuré représente avantageusement moins de 6% (précisément 5,6%), la quantité (TESPT+DTPZn) moins de 8% (précisément 6,9%), et le système de couplage lui-même (TESPT+DTPZn+DPG) moins de 10% (précisément 8,8%), par rapport au poids de charge blanche renforçante.

L'étude des différents résultats montre que les performances sont bonnes dans tous les cas, en particulier pour un taux de TESPT aussi bas, les compositions N°15 et N°16 ayant par ailleurs des propriétés quasiment identiques, tant à l'état cru qu'à l'état cuit.

Comparées à la composition N°17, les compositions N°15 et N°16 présentent par ailleurs des propriétés sensiblement améliorées : un taux de "bound rubber" supérieur, des pertes PH inférieures, des valeurs de modules M100 et M300 et de rapport M300/M100 également supérieures. De tels résultats illustrent un couplage (charge blanche/élastomère diénique) meilleur lorsque le dérivé guanidique est incorporé à l'élastomère en même temps que les autres composants (alkoxysilane polysulfuré et dithiophosphate de zinc) du système de couplage selon l'invention, c'est-à-dire au cours de la phase de fabrication dite "non-productive".

### F) Essai 6

Cet essai démontre qu'il est possible, grâce à l'activation apportée par le dithiophosphate de zinc et le dérivé guanidique, de remplacer un alkoxysilane tétrasulfuré (TESPT) par un alkoxysilane disulfuré (TESPD), connu comme moins actif que le précédent, sans pénaliser de manière sensible les autres propriétés des compositions de caoutchouc.

On compare trois compositions identiques aux différences près qui suivent:
- composition N°18: TESPT (6,4 pce);
- composition N°19: TESPD (5,6 pce);
- composition N°20: TESPD (5,6 pce) activé par 0,75 pce de dithiophosphate de zinc (soit 13,4% par rapport au poids de TESPD) et 1,5 pce de dérivé guanidique.

Chaque composition comporte 1,5 pce de diphénylguanidine. La composition N°18 est le témoin de cet essai (8% de TESPT par rapport au poids de charge blanche renforçante) ; la composition N°19, également non conforme à l'invention, contient le TESPD à un taux isomolaire par rapport au taux de TESPT, c'est-à-dire que pour les deux compositions N°18 et N°19 on utilise le même taux de fonctions triéthoxysilanes réactives vis-à-vis de la silice et de ses groupes hydroxyles de surface. La composition N°20 est la seule composition conforme à l'invention ; par rapport au poids de silice (80 pce), elle comporte moins de 8% (précisément 7%) d'alkoxysilane polysulfuré, moins de 8% (précisément 7,9%) d'alkoxysilane polysulfuré et de dithiophosphate de zinc, enfin moins de 10% (précisément 9,8%) de système de couplage selon l'invention constitué par l'association d'alkoxysilane polysulfuré, de dithiophosphate de zinc et de dérivé guanidique.

Les tableaux 11 et 12 donnent la formulation des différentes compositions, leurs propriétés avant et après cuisson (150°C, 40 minutes) ; la figure 2 reproduit les courbes de module (en MPa) en fonction de l'allongement (en %), ces courbes étant notées C18 à C20 et correspondant respectivement aux compositions N°18 à N°20.

On note que la composition N°19, comparée à la composition témoin N°18, présente des propriétés de renforcement après cuisson (M100, M300 et rapport M300/M100) qui sont très nettement inférieures, ainsi que des pertes hystérétiques plus importantes ; une diminution des performances est également enregistrée avant cuisson (augmentation de viscosité, chute du taux de "bound rubber") ; tout ceci est dû, de manière connue, à la moindre efficacité de couplage (charge blanche/élastomère diénique) de l'alkoxysilane disulfuré (TESPD) par rapport à l'alkoxysilane tétrasulfuré (TESPT).

Cependant, grâce à l'ajout d'une faible quantité (0,75 pce) de dithiophosphate de zinc dans la composition N°20, on peut observer une remontée très sensible des propriétés de renforcement (T_{BR}, M100, M300, M300/M100) et un abaissement notable des pertes PH, l'ensemble des propriétés étant ramené à un niveau équivalent à celui observé sur la composition témoin N°18. Cette efficacité du dithiophosphate de zinc et du dérivé guanidique combinés, comme activateur de couplage du TESPD, est aussi clairement illustrée par les courbes de la figure 2 (courbes C20 et C18 quasiment confondues, toutes deux situées, notamment pour des allongements supérieurs à 100%, bien au-delà de la courbe C19).

### G) Essai 7

L'invention est illustrée ici par des essais de roulage de pneumatiques à carcasse radiale de dimension 175/70 R14, fabriqués de manière connue et qui sont en tout point identiques hormis la constitution de la composition de caoutchouc constitutive de la bande de roulement qui est donnée dans le tableau 13.

La charge blanche renforçante est une silice hautement dispersible. Par rapport au poids de cette charge blanche, le couplage (charge blanche/élastomère diénique) est assuré par 8% de TESPT dans la composition témoin N°21, par moins de 6% (précisément 5,5%) seulement de TESPT dans la composition conforme à l'invention N°22, soit une réduction d'environ 30% de la quantité d'agent de couplage alkoxysilane polysulfuré.

Dans la bande de roulement du pneumatique selon l'invention, les 5,5% de TESPT sont activés par une très faible quantité de dithiophosphate de zinc (0,75 pce, soit 17% par rapport au poids d'alkoxysilane) en combinaison avec 1,5 pce de dérivé guanidique. La quantité d'alkoxysilane et de dithiophosphate de zinc représente avantageusement moins de 8% (précisément 6,4%) par rapport au poids de charge blanche renforçante. Quant au taux de système de couplage selon l'invention (TESPT+DTPZn+DPG), il représente lui-même de manière avantageuse moins de 10% (précisément 8,3%) par rapport au poids de charge blanche renforçante.

On soumet les pneumatiques ainsi préparés à un roulage sur route, sur un véhicule tourisme de marque Citroën Xantia, jusqu'à ce que l'usure due au roulage atteigne les témoins d'usure disposés dans les rainures de la bande de roulement. De manière connue de l'homme du métier, la résistance à l'usure de la composition de caoutchouc, au cours du roulage du pneumatique, est directement corrélée à la qualité du renforcement apporté par la charge renforçante, c'est-à-dire au taux de couplage (charge/élastomère) obtenu. En d'autres termes, la mesure de la résistance à l'usure est un excellent indicateur, sinon le meilleur puisque évalué sur le produit manufacturé final, de la performance du système de couplage utilisé.

On constate après roulage que le pneumatique dont la bande de roulement est conforme à l'invention montre une performance au moins égale voire très légèrement supérieure à celle du pneumatique témoin (gain de 1% environ en résistance à l'usure constaté sur le pneumatique de l'invention), sans pénalisation des autres performances au roulage. Cette résistance à l'usure équivalente, malgré un taux d'agent de couplage fortement réduit, n'a pu être obtenue que grâce à l'activation forte du couplage apportée par le dithiophosphate de zinc et le dérivé guanidique en combinaison.

En conclusion, comme le démontrent les divers essais qui précèdent, le nouveau système de couplage (charge blanche/élastomère diénique) selon l'invention, constitué par l'association d'un alkoxysilane polysulfuré, d'un dithiophosphate de zinc et d'un dérivé guanidique, offre un compromis de propriétés particulièrement avantageux aux compositions de l'invention, par rapport aux compositions renforcées d'une charge blanche de l'art antérieur.

Dans ce nouveau système de couplage, le dithiophosphate de zinc et le dérivé guanidique utilisés en combinaison, en tant qu'activateur de couplage, permettent notamment de diminuer de manière très sensible les taux d'alkoxysilanes polysulfurés utilisés habituellement dans les compositions de caoutchouc pour pneumatiques renforcées d'une charge blanche. L'invention permet ainsi de réduire le coût des compositions de caoutchouc, et donc celui des pneumatiques fabriqués à partir de telles compositions.

L'invention permet aussi, si l'on conserve un taux identique d'alkoxysilane polysulfuré, d'obtenir un niveau de couplage encore meilleur, et donc d'atteindre un renforcement des compositions de caoutchouc par la charge blanche renforçante encore amélioré.

**Tableau 1**

| Composition No : | 1 | 2 | 3 | 4 | 5 |
|---|---|---|---|---|---|
| SBR (1) | 100 | 100 | 100 | 100 | 100 |
| silice(2) | 50 | 50 | 50 | 50 | 50 |
| TESPT (Si69) | - | 4 | 2.8 | 2.8 | - |
| DTPZn (3) | - | - | - | 1 | 1 |
| ZnO | 2.5 | 2.5 | 2.5 | 2.5 | 2.5 |
| acide stéarique | 2 | 2 | 2 | 2 | 2 |
| antioxydant (4) | 1.9 | 1.9 | 1.9 | 1.9 | 1.9 |
| DPG(5) | 1.5 | 1.5 | 1.5 | 1.5 | 1.5 |
| soufre | 1.1 | 1.1 | 1.1 | 1.1 | 1.1 |
| CBS (6) | 2 | 2 | 2 | 2 | 2 |

| | | | | | |
|---|---|---|---|---|---|
| (1) SBR avec 25% de styrène, 58% de motifs polybutadiène 1-2 et 22% de motifs polybutadiène 1-4 trans (Tg = -29°C); | | | | | |
| (2) silice Zeosil 1165MP de la société Rhodia; | | | | | |
| (3) Rhenocure TP/G de la société Rhein-Chemie (50% en poids de DTPZn sur support élastomérique - soit ici 2 pce de Rhenocure TP/G); | | | | | |
| (4) N-1,3-diméthylbutyl-N-phényl-para-phénylènediamine; | | | | | |
| (5) diphénylguanidine; | | | | | |
| (6) N-cyclohexyl-2-benzothiazyl-sulfénamide. | | | | | |

**Tableau 2**

| Composition N° | 1 | 2 | 3 | 4 | 5 |
|---|---|---|---|---|---|
| *Propriétés avant cuisson:* | | | | | |
| Mooney (UM) | 120 | 95 | 105 | 95 | 120 |
| T_{BR}(%) | 23 | 35 | 30 | 40 | 25 |

| *Propriétés après cuisson:* | | | | | |
|---|---|---|---|---|---|
| | | | | | |
| PH(%) | 40 | 26 | 33 | 24 | 39 |
| contrainte rupture (MPa) | 20 | 17 | 18 | 18 | 20 |
| allongement rupture (%) | 650 | 320 | 400 | 320 | 670 |

**Tableau 3**

| Composition N° : | 6 | 7 | 8 |
|---|---|---|---|
| SBR (1) | 75 | 75 | 75 |
| BR(1 bis) | 25 | 25 | 25 |
| silice (2) | 80 | 80 | 80 |
| huile aromatique | 39.5 | 39.5 | 39.5 |
| TESPT (Si69) | 6.4 | 4.5 | 3.2 |
| DTPZn(3) | - | 0.75 | 0.75 |
| ZnO | 2.5 | 2.5 | 2.5 |
| acide stéarique | 2 | 2 | 2 |
| antioxydant (4) | 1.9 | 1.9 | 1.9 |
| DPG (5) | 1.5 | 1.5 | 1.5 |
| soufre | 1.1 | 1.1 | 1.1 |
| CBS (6) | 2 | 2 | 2 |

| | | | |
|---|---|---|---|
| (1) à (6) idem tableau 1; | | | |
| (1bis) BR avec 4.3 % de 1-2 ; 2.7 % de trans ; 93 % de cis 1-4 (Tg : -106 °C); | | | |

**Tableau 4**

| Composition N° | 6 | 7 | 8 |
|---|---|---|---|
| *Propriétés avant cuisson :* | | | |
| Mooney (UM) | 114 | 108 | 130 |
| T_{BR}(%) | 52 | 54 | 54 |

| *Propriétés après cuisson:* | | | |
|---|---|---|---|
| M10(MPa) | 5.3 | 5.7 | 5.3 |
| M100 (MPa) | 2.0 | 2.3 | 2.0 |
| M300 (MPa) | 3.2 | 3.9 | 3.2 |
| M300/M100 | 1.6 | 1.7 | 1.6 |
| | | | |
| PH (%) | 28 | 25 | 28 |
| contrainte rupture (MPa) | 23 | 23 | 23 |
| allongement rupture (%) | 570 | 490 | 570 |

**Tableau 5**

| Composition N° : | 9 | 10 |
|---|---|---|
| caoutchouc naturel | 100 | 100 |
| silice (2) | 80 | 80 |
| huile aromatique | 35 | 35 |
| TESPT (Si69) | 6.4 | 4.5 |
| DTPZn(3) | - | 0.75 |
| ZnO | 2.5 | 2.5 |
| acide stéarique | 2 | 2 |
| antioxydant (4) | 1.9 | 1.9 |
| DPG(5) | 1.5 | 1.5 |
| soufre | 1.1 | 1.1 |
| CBS (6) | 2 | 2 |

| | | |
|---|---|---|
| (2) à (6) idem tableau 1; | | |

**Tableau 6**

| Composition N° : | 9 | 10 |
|---|---|---|
| *Propriétés avant cuisson:* | | |
| Mooney (UM) | 50 | 48 |
| T_{BR}(%) | 37 | 48 |

| *Propriétés après cuisson:* | | |
|---|---|---|
| M10(MPa) | 6.4 | 6.0 |
| M100(MPa) | 2.1 | 1.9 |
| M300 (MPa) | 2.0 | 2.0 |
| M300/M100 | 0.95 | 1.05 |
| | | |
| PH (%) | 26 | 24 |
| contrainte rupture (MPa) | 20 | 20 |
| allongement rupture (%) | 530 | 550 |

**Tableau 7**

| Composition N° : | 11 | 12 | 13 | 14 |
|---|---|---|---|---|
| SBR(1) | 57.5 | 57.5 | 57.5 | 57.5 |
| BR(1 bis) | 42.5 | 42.5 | 42.5 | 42.5 |
| silice (2) | 80 | 80 | 80 | 80 |
| huile aromatique | 39.5 | 39.5 | 39.5 | 39.5 |
| TESPT (Si69) | 6.4 | 4.5 | 4.5 | 4.5 |
| DTPZn(3) | - | 0.75 | 0.75 | 0.75 |
| ZnO | 2.5 | 2.5 | 2.5 | 2.5 |
| acide stéarique | 2 | 2 | 2 | 2 |
| antioxydant (4) | 1.9 | 1.9 | 1.9 | 1.9 |
| DPG(5) | 1.5 | 0.75 | 1.5 | - |
| soufre | 1.1 | 1.1 | 1.1 | 1.1 |
| CBS(6) | 2.0 | 2.0 | 2.0 | 2.0 |

| | | | | |
|---|---|---|---|---|
| (1) à (6) ; (1 bis) idem tableau 3; | | | | |

**Tableau 8**

| Composition N° : | 11 | 12 | 13 | 14 |
|---|---|---|---|---|
| *Propriétés avant cuisson:* | | | | |
| Mooney (UM) | 84 | 100 | 82 | 110 |
| T_{BR} (%) | 43 | 47 | 50 | 43 |

| *Propriétés après cuisson:* | | | | |
|---|---|---|---|---|
| M10(MPa) | 5.4 | 5.6 | 5.8 | 5.1 |
| M100 (MPa) | 1.7 | 1.8 | 1.95 | 1.6 |
| M300(MPa) | 2.1 | 2.2 | 2.5 | 1.9 |
| M300/M100 | 1.24 | 1.22 | 1.28 | 1.19 |
| | | | | |
| PH(%) | 27 | 26 | 26 | 29 |
| contrainte rupture (MPa) | 20 | 20 | 20 | 20 |
| allongement rupture (%) | 560 | 510 | 490 | 620 |

**Tableau 9**

| Composition N° : | 15 | 16 | 17 |
|---|---|---|---|
| SBR(1) | 70 | 70 | 70 |
| BR (1 bis) | 30 | 30 | 30 |
| silice (2) | 80 | 80 | 80 |
| huile aromatique | 39.5 | 39.5 | 39.5 |
| TESPT(Si69) | 4.5 | 4.5 | 4.5 |
| DTPZn(3) | 1 | 1 | 1 |
| ZnO | 2.5 | 2.5 | 2.5 |
| acide stéarique | 2 | 2 | 2 |
| antioxydant (4) | 1.9 | 1.9 | 1.9 |
| DPG(5) | 1.5 | 1.5 | 1.5 |
| soufre | 0.7 | 0.7 | 0.7 |
| CBS(6) | 1 | 1 | 1 |

**Tableau 10**

| Composition N° : | 15 | 16 | 17 |
|---|---|---|---|
| *Propriétés avant cuisson:* | | | |
| Mooney (UM) | 100 | 101 | 104 |
| T_{BR}(%) | 51 | 50 | 44 |

| *Propriétés après cuisson:* | | | |
|---|---|---|---|
| M10(MPa) | 5.8 | 5.9 | 6.3 |
| M100(MPa) | 2.1 | 2.1 | 1.9 |
| M300(MPa) | 3.0 | 2.9 | 2.2 |
| M300/M100 | 1.40 | 1.35 | 1.20 |
| | | | |
| PH (%) | 26 | 26 | 30 |
| contrainte rupture (MPa) | 19 | 19 | 19 |
| allongement rupture (%) | 410 | 415 | 520 |

**Tableau 11**

| Composition N° : | 18 | 19 | 20 |
|---|---|---|---|
| SBR(1) | 57.5 | 57.5 | 57.5 |
| BR (1 bis) | 42.5 | 42.5 | 42.5 |
| silice (2) | 80 | 80 | 80 |
| huile aromatique | 39.5 | 39.5 | 39.5 |
| TESPT (Si69) | 6.4 | - | - |
| TESPD (Si266) | - | 5.6 | 5.6 |
| DTPZn(3) | - | - | 0.75 |
| ZnO | 2.5 | 2.5 | 2.5 |
| acide stéarique | 2 | 2 2 | |
| antioxydant (4) | 1.9 | 1.9 | 1.9 |
| DPG(5) | 1.5 | 1.5 | 1.5 |
| soufre | 1.1 | 1.1 | 1.1 |
| CBS(6) | 2 | 2 | 2.0 |

**Tableau 12**

| Composition N° : | 18 | 19 | 20 |
|---|---|---|---|
| *Propriétés avant cuisson:* | | | |
| Mooney (UM) | 89 | 96 | 90 |
| T_{BR}(%) | 43 | 40 | 42 |

| *Propriétés après cuisson:* | | | |
|---|---|---|---|
| M10(MPa) | 5.7 | 5.3 | 5.8 |
| M100(MPa) | 1.7 | 1.3 | 1.7 |
| M300(MPa) | 1.9 | 1.2 | 1.95 |
| M300/M100 | 1.10 | 0.90 | 1.15 |
| | | | |
| PH (%) | 29 | 35 | 30 |
| contrainte rupture (MPa) | 19 | 19 | 19.5 |
| allongement rupture (%) | 600 | 800 | 600 |

**Tableau 13**

| Composition N° : | 21 | 22 |
|---|---|---|
| SBR (1) | 70 | 70 |
| BR (1 bis) | 30 | 30 |
| silice (2) | 80 | 80 |
| huile aromatique | 35 | 35 |
| TESPT (Si69) | 6.4 | 4.4 |
| DTPZn (3) | - | 0.75 |
| ZnO | 2.5 | 2.5 |
| acide stéarique | 2 | 2 |
| paraffine (7) | 1.5 | 1.5 |
| antioxydant(4) | 1.9 | 1.9 |
| DPG (5) | 1.5 | 1.5 |
| soufre | 1.1 | 1.1 |
| CBS(6) | 2 | 2 |

| | | |
|---|---|---|
| (1) à (6) idem tableau 1 ; | | |
| (7) mélange de cires antiozone macro- et microcristallines. | | |

## Revendications

1. Composition de caoutchouc utilisable pour la fabrication de pneumatiques, comportant au moins (i) un élastomère diénique, (ii) une charge blanche à titre de charge renforçante, (iii) un alkoxysilane polysulfuré à titre d'agent de couplage (charge blanche/élastomère diénique) auquel sont associés (iv) un dithiophosphate de zinc et (v) un dérivé guanidique.

2. Composition de caoutchouc selon la revendication 1, dans laquelle le dérivé guanidique est la diphénylguanidine.

3. Composition de caoutchouc selon l'une quelconque des revendications 1 ou 2, dans laquelle l'alkoxysilane polysulfuré est un polysulfure de bis-alkoxyl(C₁-C₄)silylpropyle.

4. Composition de caoutchouc selon la revendication 3, dans laquelle l'alkoxysilane polysulfuré est le tétrasulfure de bis 3-triéthoxysilylpropyle.

5. Composition de caoutchouc selon la revendication 3, dans laquelle l'alkoxysilane polysulfuré est le disulfure de bis 3-triéthoxysilylpropyle.

6. Composition de caoutchouc selon l'une quelconque des revendications 1 à 5, dans laquelle la quantité d'alkoxysilane polysulfuré représente moins de 8% par rapport au poids de charge blanche renforçante.

7. Composition de caoutchouc selon la revendication 6, dans laquelle la quantité d'alkoxysilane polysulfuré représente moins de 6% par rapport au poids de charge blanche renforçante.

8. Composition de caoutchouc selon l'une quelconque des revendications 1 à 7, dans laquelle le dithiophosphate de zinc est un alkyl(C₁-C₁₂)dithiophosphate de zinc.

9. Composition de caoutchouc selon l'une quelconque des revendications 1 à 8, dans laquelle la quantité de dithiophosphate de zinc représente entre 5% et 60% par rapport au poids d'alkoxysilane polysulfuré.

10. Composition de caoutchouc selon la revendication 9, dans laquelle la quantité de dithiophosphate de zinc représente entre 10% et 40% par rapport au poids d'alkoxysilane polysulfuré.

11. Composition de caoutchouc selon l'une quelconque des revendications 1 à 10, dans laquelle la quantité totale d'alkoxysilane polysulfuré et de dithiophosphate de zinc représente moins de 10% par rapport au poids de charge blanche renforçante.

12. Composition de caoutchouc selon la revendication 11, dans laquelle la quantité totale d'alkoxysilane polysulfuré et de dithiophosphate de zinc représente entre 4% et 8% par rapport au poids de charge blanche renforçante.

13. Composition de caoutchouc selon l'une quelconque des revendications 1 à 12, dans laquelle la quantité de dérivé guanidique représente entre 0,5 et 4% par rapport au poids de charge blanche renforçante.

14. Composition de caoutchouc selon l'une quelconque des revendications 1 à 13, dans laquelle la quantité totale d'alkoxysilane polysulfuré, de dithiophosphate de zinc et de dérivé guanidique représente entre 2% et 20% par rapport au poids de charge blanche renforçante.

15. Composition de caoutchouc selon la revendication 14, dans laquelle la quantité totale d'alkoxysilane polysulfuré, de dithiophosphate de zinc et de dérivé guanidique représente entre 5% et 15% par rapport au poids de charge blanche renforçante.

16. Composition de caoutchouc selon la revendication 15, dans laquelle la quantité totale d'alkoxysilane polysulfuré, de dithiophosphate de zinc et de dérivé guanidique représente moins de 12% par rapport au poids de charge blanche renforçante.

17. Composition de caoutchouc selon la revendication 16, dans laquelle la quantité totale d'alkoxysilane polysulfuré, de dithiophosphate de zinc et de dérivé guanidique représente moins de 10% par rapport au poids de charge blanche renforçante.

18. Composition de caoutchouc selon l'une quelconque des revendications 1 à 17, dans laquelle la charge blanche renforçante est majoritairement de la silice.

19. Composition de caoutchouc selon l'une quelconque des revendications 1 à 18, dans laquelle la charge blanche renforçante constitue la totalité de la charge renforçante.

20. Composition de caoutchouc selon l'une quelconque des revendications 1 à 18, dans laquelle la charge blanche renforçante est utilisée en mélange avec du noir de carbone.

21. Composition de caoutchouc selon l'une quelconque des revendications 1 à 20, dans laquelle l'élastomère diénique est choisi dans le groupe constitué par les polybutadiènes, les polyisoprènes ou du caoutchouc naturel, les copolymères de butadiène-styrène, les copolymères de butadiène-isoprène, les copolymères d'isoprène-styrène, les copolymères de butadiène-styrène-isoprène, ou un mélange de deux ou plus de ces composés.

22. Composition de caoutchouc selon la revendication 21, dans laquelle l'élastomère diénique est un copolymère de butadiène-styrène éventuellement utilisé en mélange avec un polybutadiène.

23. Composition de caoutchouc selon la revendication 22, dans laquelle l'élastomère diénique est un copolymère de butadiène-styrène préparé en solution ayant une teneur en styrène comprise entre 20% ct 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C, ce copolymère de butadiène-styrène étant éventuellement utilisé en mélange avec un polybutadiène possèdant de préférence plus de 90% de liaisons cis-1,4.

24. Procédé pour préparer une composition de caoutchouc selon l'une quelconque des revendications 1 à 23, **caractérisé en ce qu'**on incorpore par malaxage à au moins (i) un élastomère diénique, au moins (ii) une charge blanche à titre de charge renforçante, (iii) un alkoxysilane polysulfuré à titre d'agent de couplage (charge blanche/élastomère diénique), (iv) un dithiophosphate de zinc et (v) un dérivé guanidique.

25. Procédé selon la revendication 24, **caractérisé en ce que**, en une ou plusieurs étapes, on incorpore à (i) l'élastomère diénique, au moins (ii) la charge blanche renforçante, (iii) l'alkoxysilane polysulfuré, (iv) le dithiophosphate de zinc et (v) le dérivé guanidique, et **en ce qu'**on malaxe thermomécaniquement le tout jusqu'à atteindre une température maximale comprise entre 130°C et 200°C.

26. Procédé selon la revendication 25, **caractérisé en ce que** la température maximale de malaxage est comprise entre 145°C et 180°C.

27. Utilisation d'une composition de caoutchouc conforme à l'une quelconque des revendications 1 à 23, pour la fabrication de pneumatiques ou de produits semi-finis en caoutchouc destinés aux pneumatiques, ces produits semi-finis étant choisis dans le groupe constitué par les bandes de roulement, les sous-couches de ces bandes de roulement, les nappes sommet, les flancs, les nappes carcasse, les talons, les protecteurs, les chambres à air ou les gommes intérieures étanches pour pneumatique sans chambre.

28. Pneumatique comportant une composition de caoutchouc conforme à l'une quelconque des revendications 1 à 23.

29. Produit semi-fini en caoutchouc pour pneumatique, comportant une composition de caoutchouc conforme à l'une quelconque des revendications 1 à 23, ce produit semi-fini étant choisi en particulier dans le groupe constitué par les bandes de roulement, les sous-couches de ces bandes de roulement, les nappes sommet, les flancs, les nappes carcasse, les talons, les protecteurs, les chambres à air ou les gommes intérieures étanches pour pneu sans chambre.

30. Produit semi-fini selon la revendication 29, consistant en une bande de roulement.

31. Bande de roulement selon la revendication 30, **caractérisée en ce qu'**elle est à base d'une composition de caoutchouc selon l'une quelconque des revendications 21 à 23.

32. Système de couplage (charge blanche/élastomère diénique) pour composition de caoutchouc à base d'élastomère diénique renforcée par une charge blanche, utilisable pour la fabrication de pneumatiques, **caractérisé en ce qu'**il est constitué par l'association d'un alkoxysilane polysulfuré, d'un dithiophosphate de zinc et d'un dérivé guanidique.

33. Système de couplage selon la revendication 32, dans lequel l'alkoxysilane polysulfuré représente plus de 50% en poids du système de couplage.

34. Système de couplage selon les revendications 32 ou 33, dans lequel le dérivé guanidique est la diphénylguanidine.

35. Système de couplage selon l'une quelconque des revendications 32 à 34, dans lequel l'alkoxysilane polysulfuré est un polysulfure de bis-alkoxyl(C₁-C₄)silylpropyle.

36. Système de couplage selon la revendication 35, dans lequel l'alkoxysilane polysulfuré est le tétrasulfuré de bis 3-triéthoxysilylpropyle.

37. Système de couplage selon la revendication 35, dans lequel l'alkoxysilane polysulfuré est le disulfure de bis 3-triéthoxysilylpropyle.

38. Système de couplage selon l'une quelconque des revendications 32 à 37, dans lequel le dithiophosphate de zinc est un alkyl(C₁-C₁₂)dithiophosphate de zinc.

39. Utilisation d'un système de couplage selon l'une quelconque des revendications 32 à 38, pour le couplage d'une charge blanche renforçante et d'un élastomère diénique dans une composition de caoutchouc utilisable pour la fabrication de pneumatiques.

40. Utilisation en combinaison d'un dithiophosphate de zinc et d'un dérivé guanidique, dans une composition de caoutchouc renforcée d'une charge blanche utilisable pour la fabrication de pneumatiques, pour activer la fonction de couplage (charge blanche/élastomère diénique) d'un alkoxysilane polysulfuré.

41. Utilisation selon la revendication 40, dans laquelle l'alkoxysilane polysulfuré est un polysulfure de bis-alkoxyl(C₁-C₄)silylpropyle.

42. Utilisation selon la revendication 41, dans laquelle l'alkoxysilane polysulfuré est le tétrasulfure de bis 3-triéthoxysilylpropyle.

43. Utilisation selon la revendication 41, dans laquelle l'alkoxysilane polysulfuré est le disulfure de bis 3-triéthoxysilylpropyle.

44. Utilisation selon l'une quelconque des revendications 40 à 43, dans laquelle le dithiophosphate de zinc est un alkyl(C₁-C₁₂)dithiophosphate de zinc.

45. Utilisation selon l'une quelconque des revendications 40 à 44, **caractérisée en ce que** le dérivé guanidique est la diphénylguanidine.

## Patentansprüche

1. Kautschukmischung, die zur Herstellung von Luftreifen verwendbar ist und die zumindest (i) ein Dienelastomer, (ii) einen hellen Füllstoff als verstärkenden Füllstoff und (iii) ein polysulfidhaltiges Alkoxysilan als Kupplungsmittel (heller Füllstoff/Dienelastomer) in Kombination mit (iv) einem Zinkdithiophosphat und (v) einem Guanidinderivat enthält.

2. Kautschukmischung nach Anspruch 1, wobei das Guanidinderivat das Diphenylguanidin ist.

3. Kautschukmischung nach einem der Ansprüche 1 oder 2, wobei das polysulfidhaltige Alkoxysilan ein Bis(C₁₋₄)alkoxysilylpropylpolysulfid ist.

4. Kautschukmischung nach Anspruch 3, wobei das polysulfidhaltige Alkoxysilan das Bis-3-triethoxysilylpropyltetrasulfid ist.

5. Kautschukmischung nach Anspruch 3, wobei das polysulfidhaltige Alkoxysilan das Bis-3-triethoxysilylpropyldisulfid ist.

6. Kautschukmischung nach einem der Ansprüche 1 bis 5, wobei die Menge des polysulfidhaltigen Alkoxysilans weniger als 8 %, bezogen auf das Gewicht des verstärkenden hellen Füllstoffs, ausmacht.

7. Kautschukmischung nach Anspruch 6, wobei die Menge des polysulfidhaltigen Alkoxysilans weniger als 6 %, bezogen auf das Gewicht des verstärkenden hellen Füllstoffs, ausmacht.

8. Kautschukmischung nach einem der Ansprüche 1 bis 7, wobei das Zinkdithiophosphat ein Zink(C₁₋₁₂)alkyldithiophosphat ist.

9. Kautschukmischung nach einem der Ansprüche 1 bis 8, wobei die Menge des Zinkdithiophosphats 5 bis 60 %, bezogen auf das Gewicht des polysulfidhaltigen Alkoxysilans, ausmacht.

10. Kautschukmischung nach Anspruch 9, wobei die Menge des Zinkdithiophosphats 10 bis 40 %, bezogen auf das Gewicht des polysulfidhaltigen Alkoxysilans, ausmacht.

11. Kautschukmischung nach einem der Ansprüche 1 bis 10, wobei die Gesamtmenge von polysulfidhaltigem Alkoxysilan und Zinkdithiophosphat weniger als 10 %, bezogen auf das Gewicht des verstärkenden hellen Füllstoffs, ausmacht.

12. Kautschukmischung nach Anspruch 11, wobei die Gesamtmenge von polysulfidhaltigem Alkoxysilan und Zinkdithiophosphat 4 bis 8 %, bezogen auf das Gewicht des verstärkenden hellen Füllstoffs, ausmacht.

13. Kautschukmischung nach einem der Ansprüche 1 bis 12, wobei die Menge des Guanidinderivats 0,5 bis 4 %, bezogen auf das Gewicht des verstärkenden hellen Füllstoffs, ausmacht.

14. Kautschukmischung nach einem der Ansprüche 1 bis 13, wobei die Gesamtmenge von polysulfidhaltigem Alkoxysilan, Zinkdithiophosphat und Guanidinderivat 2 bis 20 %, bezogen auf das Gewicht des verstärkenden hellen Füllstoffs, ausmacht.

15. Kautschukmischung nach Anspruch 14, wobei die Gesamtmenge von polysulfidhaltigem Alkoxysilan, Zinkdithiophosphat und Guanidinderivat 5 bis 15 %, bezogen auf das Gewicht des verstärkenden hellen Füllstoffs, ausmacht.

16. Kautschukmischung nach Anspruch 15, wobei die Gesamtmenge von polysulfidhaltigem Alkoxysilan, Zinkdithiophosphat und Guanidinderivat weniger als 12 %, bezogen auf das Gewicht des verstärkenden hellen Füllstoffs, ausmacht.

17. Kautschukmischung nach Anspruch 16, wobei die Gesamtmenge von polysulfidhaltigem Alkoxysilan, Zinkdithiophosphat und Guanidinderivat weniger als 10 %, bezogen auf das Gewicht des verstärkenden hellen Füllstoffs, ausmacht.

18. Kautschukmischung nach einem der Ansprüche 1 bis 17, wobei der verstärkende helle Füllstoff hauptsächlich aus Kieselsäure besteht.

19. Kautschukmischung nach einem der Ansprüche 1 bis 18, wobei der verstärkende helle Füllstoff die Gesamtheit des verstärkenden Füllstoffs ausmacht.

20. Kautschukmischung nach einem der Ansprüche 1 bis 18, wobei der verstärkende helle Füllstoff im Gemisch mit Ruß verwendet wird.

21. Kautschukmischung nach einem der Ansprüche 1 bis 20, wobei das Dienelastomer unter den Polybutadienen, Polyisoprenen oder Naturkautschuk, Butadien-Styrol-Copolymeren, Butadien-Isopren-Copolymeren, Isopren-Styrol-Copolymeren, Butadien-Styrol-Isopren-Copolymeren oder einem Gemisch von zwei oder mehreren dieser Verbindungen ausgewählt ist.

22. Kautschukmischung nach Anspruch 21, wobei das Dienelastomer ein Butadien-Styrol-Copolymer ist, das gegebenenfalls im Gemisch mit einem Polybutadien verwendet wird.

23. Kautschukmischung nach Anspruch 22, wobei das Dienelastomer ein Butadien-Styrol-Copolymer ist, das in Lösung hergestellt wird und einen Styrolgehalt von 20 bis 30 Gew.-%, einen Gehalt an Vinylbindungen des Polybutadienanteils im Bereich von 15 bis 65 %, einen Gehalt an trans-1,4-Bindungen im Bereich von 20 bis 75 % und eine Glasübergangstemperatur im Bereich von -20 bis -55 °C aufweist, wobei dieses Butadien-Styrol-Copolymer gegebenenfalls im Gemisch mit einem Polybutadien verwendet wird, das vorzugsweise mehr als 90 % cis-1,4-Bindungen aufweist.

24. Verfahren zur Herstellung einer Kautschukmischung nach einem der Ansprüche 1 bis 23, **dadurch gekennzeichnet, daß** durch Kneten zumindest (i) ein Dienelastomer, zumindest (ii) ein heller Füllstoff als verstärkender Füllstoff, (iii) ein polysulfidhaltiges Alkoxysilan als Kupplungsmittel (heller Füllstoff/Dienelastomer), (iv) ein Zinkdithiophosphat und (v) ein Guanidinderivat eingearbeitet werden.

25. Verfahren nach Anspruch 24, **dadurch gekennzeichnet, daß** (i) das Dienelastomer, zumindest (ii) der verstärkende helle Füllstoff, (iii) das polysulfidhaltige Alkoxysilan, (iv) das Zinkdithiophosphat und (v) das Guanidinderivat in einem oder mehreren Schritten eingearbeitet werden, und dadurch, daß das Ganze thermomechanisch bearbeitet wird, bis eine Maximaltemperatur von 130 bis 200 °C erreicht wird.

26. Verfahren nach Anspruch 25, **dadurch gekennzeichnet, daß** die Maximaltemperatur beim Kneten im Bereich von 145 bis 180 °C liegt.

27. Verwendung einer Kautschukmischung nach einem der Ansprüche 1 bis 23 zur Herstellung von Luftreifen oder Halbfertigprodukten aus Kautschuk, die für Luftreifen vorgesehen sind, wobei die Halbfertigprodukte insbesondere unter den Laufstreifen, Unterschichten für Laufstreifen, Scheitellagen, Seitenprofilen, Karkassenlagen, Reifenwülsten, Protektoren, Schläuchen oder Innenseelen für schlauchlose Reifen ausgewählt sind.

28. Luftreifen, der eine Kautschukmischung nach einem der Ansprüche 1 bis 23 enthält.

29. Halbfertigprodukt aus Kautschuk für Luftreifen, das eine Kautschukmischung nach einem der Ansprüche 1 bis 23 enthält, wobei das Halbfertigprodukt insbesondere unter den Laufstreifen, Unterschichten für Laufstreifen, Scheitellagen, Seitenprofilen, Karkassenlagen, Reifenwülsten, Protektoren, Schläuchen oder Innenseelen für schlauchlose Reifen ausgewählt sind.

30. Halbfertigprodukt nach Anspruch 29, das ein Laufstreifen ist.

31. Laufstreifen nach Anspruch 30, **dadurch gekennzeichnet, daß** er auf einer Kautschukmischung nach einem der Ansprüche 21 bis 23 basiert.

32. Kupplungssystem (heller Füllstoff/Dienelastomer) für Kautschukmischungen auf der Basis eines mit einem hellen Füllstoff verstärkten Dienelastomers, das zur Herstellung von Luftreifen verwendbar ist, **dadurch gekennzeichnet, daß** es aus der Kombination eines polysulfidhaltigen Alkoxysilans, eines Zinkdithiophosphats und eines Guanidinderivats besteht.

33. Kupplungssystem nach Anspruch 32, wobei das polysulfidhaltige Alkoxysilan mehr als 50 Gew.-% des Kupplungssystems ausmacht.

34. Kupplüngssystem nach Anspruch 32 oder 33, wobei das Guanidinderivat das Diphenylguanidin ist.

35. Kupplungssystem nach einem der Ansprüche 32 bis 34, wobei das polysulfidhaltige Alkoxysilan ein Bis(C₁₋₄)alkoxysilylpropylpolysulfid ist.

36. Kupplungssystem nach Anspruch 35, wobei das polysulfidhaltige Alkoxysilan das Bis-3-triethoxysilylpropyltetrasulfid ist.

37. Kupplungssystem nach Anspruch 35, wobei das polysulfidhaltige Alkoxysilan das Bis-3-triethoxysilylpropyldisulfid ist.

38. Kupplungssystem nach einem der Ansprüche 32 bis 37, wobei das Zinkdithiophosphat ein Zink(C₁₋₁₂)alkyldithiophosphat ist.

39. Verwendung eines Kupplungssystems nach einem der Ansprüche 32 bis 38 zur Kupplung eines verstärkenden hellen Füllstoffs und eines Dienelastomers in einer Kautschukmischung, die zur Herstellung von Luftreifen verwendbar ist.

40. Verwendung eines Zinkdithiophosphats in Kombination mit einem Guanidinderivat in einer mit einem hellen Füllstoff verstärkten Kautschukmischung, die zur Herstellung von Luftreifen verwendbar ist, um die Kupplungsfunktion (heller Füllstoff/Dienelastomer) eines polysulfidhaltigen Alkoxysilans zu aktivieren.

41. Verwendung nach Anspruch 40, wobei das polysulfidhaltige Alkoxysilan ein Bis(C₁₋₄)alkoxysilylpropylpolysulfid ist.

42. Verwendung nach Anspruch 41, wobei das polysulfidhaltige Alkoxysilan das Bis-3-triethoxysilylpropyltetrasulfid ist.

43. Verwendung nach Anspruch 41, wobei das polysulfidhaltige Alkoxysilan das Bis-3-triethoxysilylpropyldisulfid ist.

44. Verwendung nach einem der Ansprüche 40 bis 43, wobei das Zinkdithiophosphat ein Zink(C₁₋₁₂)alkyldithiophosphat ist.

45. Verwendung nach einem der Ansprüche 40 bis 44, **dadurch gekennzeichnet, daß** das Guanidinderivat das Diphenylguanidin ist.

## Claims

1. A rubber composition usable for the manufacture of tyres, comprising at least (i) one diene elastomer, (ii) a white filler as reinforcing filler, (iii) a polysulphurised alkoxysilane as (white filler/diene elastomer) coupling agent, with which are associated (iv) a zinc dithiophosphate and (v) a guanidine derivative.

2. A rubber composition according to Claim 1, in which the guanidine derivative is diphenylguanidine.

3. A rubber composition according to any one of Claims 1 or 2, in which the polysulphurised alkoxysilane is a bis-(C₁-C₄) alkoxysilylpropyl polysulphide.

4. A rubber composition according to Claim 3, in which the polysulphurised alkoxysilane is bis-3-triethoxysilylpropyl tetrasulphide.

5. A rubber composition according to Claim 3, in which the polysulphurised alkoxysilane is bis-3-triethoxysilylpropyl disulphide.

6. A rubber composition according to any one of Claims 1 to 5, in which the quantity of polysulphurised alkoxysilane represents less than 8% relative to the weight of reinforcing white filler.

7. A rubber composition according to Claim 6, in which the quantity of polysulphurised alkoxysilane represents less than 6% relative to the weight of reinforcing white filler.

8. A rubber composition according to any one of Claims 1 to 7, in which the zinc dithiophosphate is a zinc (C₁-C₁₂)alkyldithiophosphate.

9. A rubber composition according to any one of Claims 1 to 8, in which the quantity of zinc dithiophosphate represents between 5% and 60% relative to the weight of polysulphurised alkoxysilane.

10. A rubber composition according to Claim 9, in which the quantity of zinc dithiophosphate represents between 10% and 40% relative to the weight of polysulphurised alkoxysilane.

11. A rubber composition according to any one of Claims 1 to 10, in which the total quantity of polysulphurised alkoxysilane and of zinc dithiophosphate represents less than 10% relative to the weight of reinforcing white filler.

12. A rubber composition according to Claim 11, in which the total quantity of polysulphurised alkoxysilane and of zinc dithiophosphate represents between 4% and 8% relative to the weight of reinforcing white filler.

13. A rubber composition according to any one of Claims 1 to 12, in which the quantity of guanidine derivative represents between 0.5 and 4% relative to the weight of reinforcing white filler.

14. A rubber composition according to any one of Claims 1 to 13, in which the total quantity of polysulphurised alkoxysilane, of zinc dithiophosphate and of guanidine derivative represents between 2% and 20% relative to the weight of reinforcing white filler.

15. A rubber composition according to Claim 14, in which the total quantity of polysulphurised alkoxysilane, of zinc dithiophosphate and of guanidine derivative represents between 5% and 15% relative to the weight of reinforcing white filler.

16. A rubber composition according to Claim 15, in which the total quantity of polysulphurised alkoxysilane, of zinc dithiophosphate and of guanidine derivative represents less than 12% relative to the weight of reinforcing white filler,

17. A rubber composition according to Claim 16, in which the total quantity of polysulphurised alkoxysilane, of zinc dithiophosphate and of guanidine derivative represents less than 10% relative to the weight of reinforcing white filler.

18. A rubber composition according to any one of Claims 1 to 17, in which the reinforcing white filler is majoritarily silica.

19. A rubber composition according to any one of Claims 1 to 18, in which the reinforcing white filler constitutes the entire reinforcing filler.

20. A rubber composition according to any one of Claims 1 to 18, in which the reinforcing white filler is used in a mixture with carbon black.

21. A rubber composition according to any one of Claims 1 to 20, in which the diene elastomer is selected from the group which consists of polybutadienes, polyisoprenes or natural rubber, butadiene-styrene copolymers, butadiene-isoprene copolymers, isoprene-styrene copolymers, butadiene-styrene-isoprene copolymers, or a mixture of two or more of these compounds.

22. A rubber composition according to Claim 21, in which the diene elastomer is a butadiene-styrene copolymer possibly used in a mixture with a polybutadiene.

23. A rubber composition according to Claim 22, in which the diene elastomer is a butadiene-styrene copolymer prepared in solution having a styrene content of between 20% and 30% by weight, a content of vinyl bonds of the butadiene part of between 15% and 65%, a content of trans-1,4 bonds of between 20% and 75% and a glass transition temperature of between -20°C and -55°C, this butadiene-styrene copolymer possibly being used in a mixture with a polybutadiene having preferably more than 90% cis-1,4 bonds.

24. A process for preparing a rubber composition according to any one of Claims 1 to 23, **characterised in that** there are incorporated by kneading in at least (i) one diene elastomer, at least (ii) a white filler as reinforcing filler, (iii) a polysulphurised alkoxysilane as (white filler/diene elastomer) coupling agent, (iv) a zinc dithiophosphate and (v) a guanidine derivative.

25. A process according to Claim 24, **characterised in that**, in one or more steps, there are incorporated in (i) the diene elastomer, at least (ii) the reinforcing white filler, (iii) the polysulphurised alkoxysilane, (iv) the zinc dithiophosphate and (v) the guanidine derivative, and that the entire mixture is thermomechanically kneaded until a maximum temperature of between 130°C and 200°C is reached.

26. A process according to Claim 25, **characterised in that** the maximum kneading temperature is between 145°C and 180°C.

27. The use of a rubber composition according to any one of Claims 1 to 23 for the manufacture of tyres or semi-finished rubber products intended for tyres, these semi-finished products being selected from the group comprising treads, underlayers for such treads, crown plies, sidewalls, carcass plies, beads, protectors, inner tubes or airtight internal rubbers for tubeless tyres.

28. A tyre comprising a rubber composition according to any one of Claims 1 to 23.

29. A semi-finished rubber product for tyres, comprising a rubber composition according to any one of Claims 1 to 23, this semi-finished product being selected in particular from among the group comprising treads, underlayers for these treads, crown plies, sidewalls, carcass plies, beads, protectors, inner tubes or airtight internal rubbers for tubeless tyres.

30. A semi-finished product according to Claim 29, consisting of a tread.

31. A tread according to Claim 30, **characterised in that** it is based on a rubber composition according to any one of Claims 21 to 23.

32. A (white filler/diene elastomer) coupling system for a rubber composition based on diene elastomer reinforced by a white filler, usable for the manufacture of tyres, **characterised in that** it is formed by the association of a polysulphurised alkoxysilane, a zinc dithiophosphate and a guanidine derivative.

33. A coupling system according to Claim 32, in which the polysulphurised alkoxysilane represents more than 50% by weight of the coupling system.

34. A coupling system according to Claims 32 or 33, in which the guanidine derivative is diphenylguanidine.

35. A coupling system according to any one of Claims 32 to 34, in which the polysulphurised alkoxysilane is a bis-(C₁-C₄)alkoxysilylpropyl polysulphide.

36. A coupling system according to Claim 35, in which the polysulphurised alkoxysilane is bis-3-triethoxysilylpropyl tetrasulphide.

37. A coupling system according to Claim 35, in which the polysulphurised alkoxysilane is bis-3-triethoxysilylpropyl disulphide.

38. A coupling system according to any one of Claims 32 to 37, in which the zinc dithiophosphate is a zinc (C₁-C₁₂)alkyldithiophosphate.

39. The use of a coupling system according to any one of Claims 32 to 38 for coupling a reinforcing white filler and a diene elastomer in a rubber composition usable for the manufacture of tyres.

40. The use in combination of a zinc dithiophosphate and a guanidine derivative in a rubber composition reinforced with a white filler usable for the manufacture of tyres, in order to activate the (white filler/diene elastomer) coupling function of a polysulphurised alkoxysilane.

41. The use according to Claim 40, in which the polysulphurised alkoxysilane is a bis-(C₁-C₄)alkoxysilylpropyl polysulphide.

42. The use according to Claim 41, in which the polysulphurised alkoxysilane is bis-3-triethoxysilylpropyl tetrasulphide.

43. The use according to Claim 41, in which the polysulphurised alkoxysilane is bis-3-triethoxysilylpropyl disulphide.

44. The use according to any one of Claims 40 to 43, in which the zinc dithiophosphate is a zinc (C₁-C₁₂)alkyl dithiophosphate.

45. The use according to any one of Claims 40 to 44, **characterised in that** the guanidine derivative is diphenylguanidine.
